# EUROPEAN PATENT APPLICATION

(11) **EP 4 664 730 A1**
(43) Date of publication of application: **17.12.2025**
(21) Application number: 24826111.7
(22) Date of filing: 29.04.2024
(51) Int. Cl.: H02K 7/14, H02K 7/08, H02K 9/06, H02K 5/04, H02K 1/18, H02K 21/14, H02K 1/04, A47L 9/22, A47L 9/16

(54) **MOTOR AND CLEANER HAVING SAME**

(30) Priority: 20.06.2023 KR 20230079317; 01.02.2024 KR 20240016257
(71) Applicant: Samsung Electronics Co., Ltd., Suwon-si, Gyeonggi-do 16677 (KR)
(72) Inventor: KANG, Wonsoo, Suwon-si, Gyeonggi-do 16677 (KR); KANG, Younmo, Suwon-si, Gyeonggi-do 16677 (KR); KIM, Jimin, Suwon-si, Gyeonggi-do 16677 (KR); PARK, Taesang, Suwon-si, Gyeonggi-do 16677 (KR); LEE, Geonho, Suwon-si, Gyeonggi-do 16677 (KR); CHO, Keeyeon, Suwon-si, Gyeonggi-do 16677 (KR); CHO, Minshin, Suwon-si, Gyeonggi-do 16677 (KR); HAN, Jinwoo, Suwon-si, Gyeonggi-do 16677 (KR); HWANG, Woong, Suwon-si, Gyeonggi-do 16677 (KR)
(74) Representative: Gulde & Partner
(86) International application number: PCT/KR2024/005792
(87) International publication number: WO 2024/262789

(57) **Abstract**

This cleaner comprises: a stator; a rotor that can be inserted into a rotor accommodation portion formed in the stator and is provided to rotate by electromagnetically interacting with the stator; an impeller that is coupled to the rotor and rotates to generate a flow of air; and a housing including a base portion, which has an accommodation space for accommodating the rotor and the stator, and a cover portion, which covers the impeller and has a through hole provided to allow the rotor to pass therethrough. The base unit comprises: a stator insertion hole formed open on a side portion of the base unit to allow the insertion of the stator into the accommodation space; and a bearing hole which is formed in an upper portion of the base unit, and in which is installed a bearing that is inserted into the rotor accommodation portion to support the rotor accommodated in the accommodation space when the stator is accommodated in the accommodation space.

## Description

### [Technical Field]

The present disclosure relates to a motor and a cleaner including the same, and more particular, to a motor including a housing with an improved structure and a cleaner including the same.

### [Background Art]

In general, a motor is a machine that obtains rotational power from electrical energy and includes a stator and a rotor. The rotor is configured to interact electromagnetically with the stator and rotates by a force acting between the magnetic field and the current flowing in a coil.

The motor may include a stator, a rotor configured to rotate, a housing that accommodates the stator and the rotor, and a bearing that couples the stator and the rotor at an accurate position to ensure stable rotation of the rotor. Additionally, a motor for a cleaner may include an impeller that generates an air flow.

The motor may be placed within a main body of the cleaner to generate power, and may be used in various types of cleaners.

The motor used in the cleaner has large vibrations due to high-speed rotation, and most of the motor vibration is 1X vibration. 1X vibration is caused by unbalance in the rotor assembly, etc. The vibration of the motor may cause noise in the cleaner and further reduce the operating efficiency of the motor.

### [Disclosure]

### [Technical Problem]

The present disclosure is directed to providing a motor capable of reducing noise and a cleaner including the same.

Further, the present disclosure is directed to providing a motor with increased operating efficiency and a cleaner including the same.

Further, the present disclosure is directed to providing a motor capable of stably rotating a rotor and a cleaner including the same.

Further, the present disclosure is directed to providing a motor capable of precisely adjusting a clearance between an impeller and a housing and a cleaner including the same.

Technical tasks to be achieved in this document are not limited to the technical tasks mentioned above, and other technical tasks not mentioned will be clearly understood by those skilled in the art from the description below.

### [Technical Solution]

One aspect of the present disclosure provides a motor comprising a stator , a rotor configured to be insertable into a rotor receiving portion formed in the stator and to rotate by electromagnetically interacting with the stator, an impeller coupled to the rotor and configured to generate an airflow by being rotated and a housing comprising a base portion comprising a receiving space provided to accommodate the rotor and the stator and a cover portion comprising a through-hole, through which the rotor passes, the cover portion provided to cover the impeller. The base portion comprises a stator insertion hole formed to be open on a lateral side of the base portion to allow the stator to be inserted into the receiving space, and a bearing hole in which a bearing configured to support the rotor inserted into the rotor receiving portion and accommodated in the receiving space is installed when the stator is accommodated in the receiving space, and formed in an upper portion of the base portion.

Another aspect of the present disclosure provides a cleaner including a suction head, a main body provided to communicate with the suction head, and a motor installed in the main body to form a suction airflow from the suction head to an inside of the main body. The motor includes a stator, a rotor configured to rotate by electromagnetically interacting with the stator, and an impeller coupled to the rotor and configured to generate an airflow by being rotated. The motor includes a housing including a base portion including a receiving space provided to accommodate the rotor and the stator, and a cover portion including a through-hole through which the rotor passes and provided to cover the impeller. The base portion includes a bearing hole formed in an upper portion of the base portion to install a bearing provided to support the rotor, and a stator insertion hole formed to be open on a lateral side of the base portion to allow the stator to be inserted into the receiving space.

Another aspect of the present disclosure provides a cleaner including a suction head, a main body provided to communicate with the suction head, and a motor installed in the main body to form a suction airflow from the suction head to an inside of the main body. The motor includes a rotor coupled to an impeller configured to generate an air flow by being rotated, and a stator configured to rotate the rotor by electromagnetically interacting with the rotor and including a core coupler formed on an outer circumference thereof. The motor includes a housing including a base portion including a first coupler provided to be coupled to a portion of the core coupler, the base portion provided to rotatably support the rotor, and a cover portion including a second coupler provided to be coupled to a remaining portion of the core coupler, the cover portion provided to cover the impeller. When the first coupler and the second coupler are coupled to the core coupler, a separation space is formed between the core coupler and the first coupler and between the core coupler and the second coupler. The base portion and the cove portion are integrally coupled to each other by a resin, which is insert-injected into the separation space, so as to support the stator.

### [Description of Drawings]

FIG. 1 is a view illustrating a cleaner according to one embodiment.
FIG. 2 is a view illustrating a motor according to one embodiment.
FIG. 3 is a cross-sectional view of the motor shown in FIG. 2.
FIG. 4 is an exploded view of the motor according to one embodiment.
FIG. 5 is a view illustrating the exploded view of the motor shown in FIG. 4 when viewed from another angle.
FIG. 6 is a view illustrating a housing separated from the cleaner according to one embodiment.
FIG. 7 is a view illustrating the housing shown in FIG. 6 when viewed from another angle.
FIG. 8 is a top view of the housing of FIG. 6.
FIG. 9 is a view illustrating a motor according to one embodiment.
FIG. 10 is a cross-sectional view taken along a line G-G' of the motor according to one embodiment.
FIG. 11 is an enlarged view of a portion Q of FIG. 10.
FIG. 12 is an exploded view of the motor according to one embodiment.
FIG. 13 is a view illustrating the exploded view of FIG. 12 when viewed from another angle.
FIG. 14 is a view illustrating a housing and a stator in the motor according to one embodiment.
FIG. 15 is an enlarged view of a portion P of FIG. 10.
FIG. 16 is a view illustrating a state in which a support member and a coupling member are separated in FIG. 14.
FIG. 17 is a view illustrating a housing in the motor according to one embodiment.
FIG. 18 is a view illustrating FIG. 17 when viewed from another angle.
FIG. 19 is a view illustrating FIG. 17 when viewed from another angle.
FIG. 20 is a view illustrating a motor according to one embodiment.
FIG. 21 is an exploded view of the motor according to one embodiment.
FIG. 22 is a view illustrating a housing and a stator separated from the motor according to one embodiment.
FIG. 23 is a view illustrating a process in which the housing is integrally coupled in the motor according to one embodiment.
FIG. 24 is a view illustrating a process in which the housing is integrally coupled in the motor according to an embodiment.
FIG. 25 is a view illustrating a process in which the housing is integrally coupled to the motor according to one embodiment.
FIG. 26 is a view illustrating a process in which the housing is integrally coupled in the motor according to an embodiment.
FIG. 27 is a cross-sectional view taken along a line K-K' of FIG. 26 and illustrates a state in which a resin is injected into an injection hole.
FIG. 28 is a view illustrating a state in which the housing is integrally coupled in the motor according to one embodiment.

### [Modes of the Invention]

Embodiments described in the disclosure and configurations shown in the drawings are merely examples of the embodiments of the disclosure, and may be modified in various different ways at the time of filing of the present application to replace the embodiments and drawings of the disclosure.

In addition, the same reference numerals or signs shown in the drawings of the disclosure indicate elements or components performing substantially the same function. Shapes and sizes of elements in the drawings may be exaggerated for clear description.

Also, the terms used herein are used to describe the embodiments and are not intended to limit and / or restrict the disclosure. The singular forms "a," "an" and "the" are intended to include the plural forms as well, unless the context clearly indicates otherwise. In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

It will be understood that, although the terms first, second, third, etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and / or" includes a plurality of combinations of relevant items or any one item among a plurality of relevant items.

In the following detailed description, the terms of "front", "rear", "left", "right", "up", "down", and the like may be defined by the drawings, but the shape and the location of the component is not limited by the term.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

As for a rotation direction, clockwise may be described as a first direction, and counterclockwise, which is the opposite direction of the first direction, may be described as a second direction. The terms may be used to describe specific details for describing the present disclosure, but the rotation direction of the components of the present disclosure is not limited by the terms.

Hereinafter exemplary embodiments of a motor and a cleaner including the same will be described in detail with reference to the accompanying drawings.

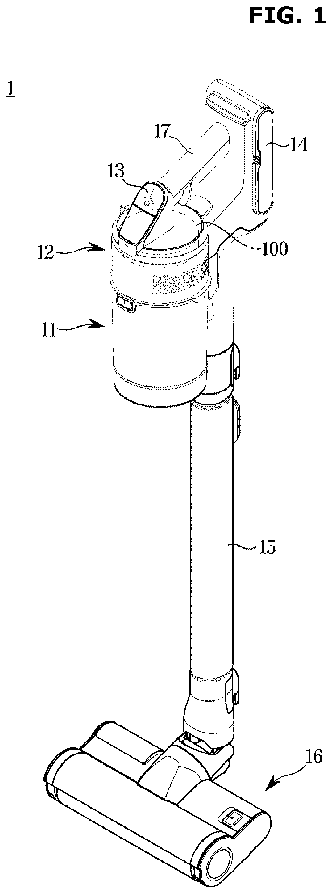

FIG. 1 is a view illustrating a cleaner according to one embodiment.

Referring to FIG. 1, a cleaner 1 according to one of various embodiments of the present disclosure may include a motor 100. There is no limitation in the type of cleaner 1. For example, the motor 100 may be used in a stick vacuum cleaner or an upright vacuum cleaner.

Further, the motor 100 may be applied to various home appliances in addition to the cleaner 1. Hereinafter the description will be described with reference to the stick vacuum cleaner including the motor 100.

The cleaner 1 may include a main body 12 and a suction head 16. The cleaner 1 may include an extension pipe 15 connecting the main body 12 and the suction head 16, and a handle 17 connected to the main body 12. The main body 12 and the suction head 16 may be in communication with each other through the extension pipe 15.

The suction head 16 may be provided at a lower part of the main body 12 and arranged to be in contact with a surface to be cleaned. The suction head 16 may be in contact with the surface to be cleaned and introduce dust or dirt from the surface into the main body 12 by using a suction force generated from the motor 100.

The suction head 16 may include a suction brush (not shown) and suction air and foreign substances from the surface by being in close contact with the surface. The suction head 16 may be rotatably coupled to the extension pipe 15.

The extension pipe 15 may be formed of a pipe or a flexible hose with a certain rigidity.

The cleaner 1 may include the motor 100. The motor 100 may generate power to generate a suction force within the main body 12. The motor 100 may be provided to form a suction airflow that is from the suction head 16 into the inside of the main body 12.

The extension pipe 15 may transmit the suction force generated by the motor 100 inside the main body 12 to the suction head 16, and guide foreign substances such as air and dust, which are suctioned through the suction head 16, to the main body 12.

The cleaner 1 may include a dust collector 11. The dust collector 11 may be configured to collect dust or dirt on the surface that is sucked from the suction head 16 and moved into the main body 12.

The handle 17 corresponding to a portion coupled to the main body 12 may be provided to be gripped by a user so as to allow the user to manipulate the cleaner 1. A manipulator 13 may be provided in the handle 17 and thus a user can manipulate the cleaner 1.

The main body 12 may include the manipulator 13. A user can turn on/off the cleaner 1 or manipulate a suction strength by manipulating a power button provided on the manipulator 13.

The main body 12 may include a battery 14 configured to supply power required for driving components of the cleaner 1.

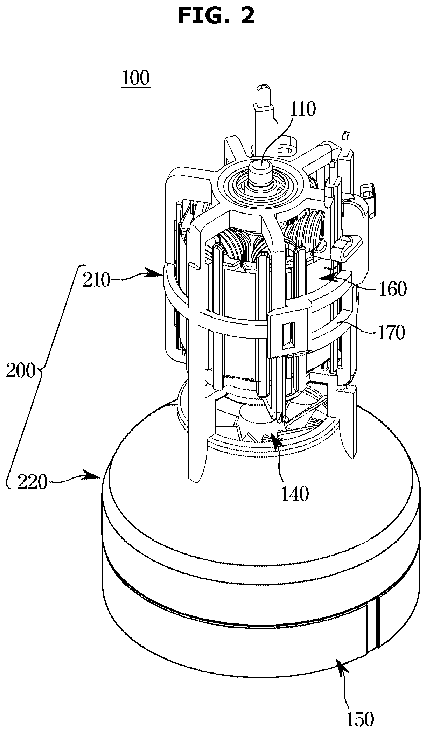

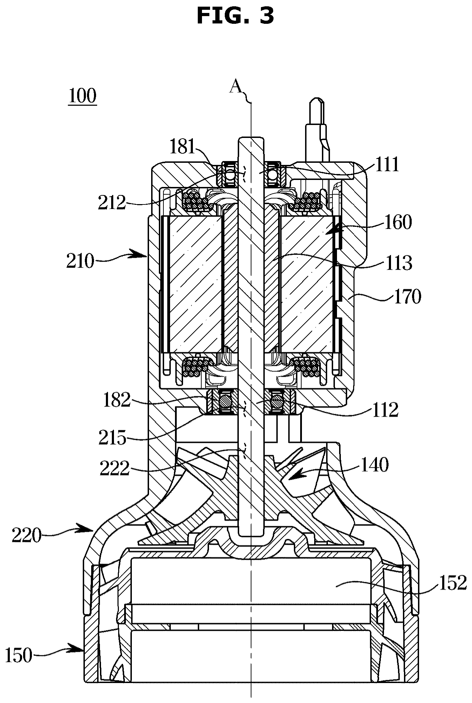

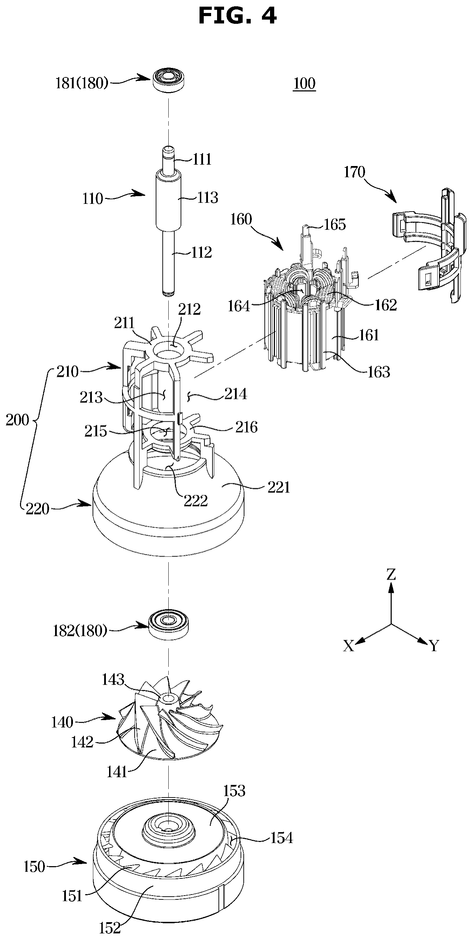

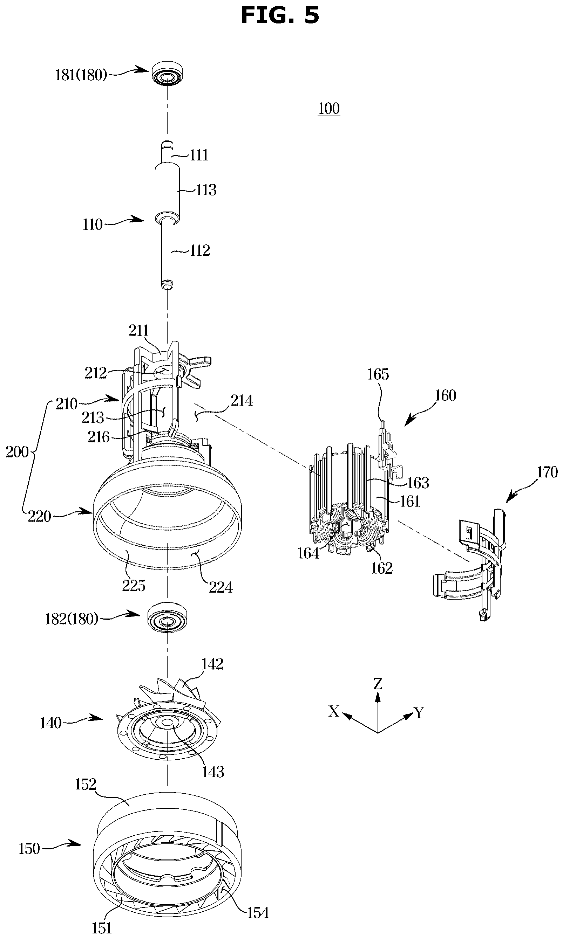

FIG. 2 is a view illustrating a motor according to one embodiment. FIG. 3 is a cross-sectional view of the motor shown in FIG. 2. FIG. 4 is an exploded view of the motor according to one embodiment. FIG. 5 is a view illustrating the exploded view of the motor shown in FIG. 4 when viewed from another angle.

Referring to FIGS. 2 to 5, the motor 100 may include a stator 160, a rotor 110, and a housing 200 provided to accommodate the stator 160 and the rotor 110.

The stator 160 may include a stator core 161, a stator coil 162, an insulator 163, and a rotor receiving portion 164. The stator 160 may be configured to generate magnetic flux when a current is applied to the stator coil 162.

The rotor receiving portion 164 for accommodating the rotor 110 may be provided in a central portion of the stator core 161. The rotor 110 may be disposed in the rotor receiving portion 164. The rotor 110 may interact electromagnetically with the stator 160.

The stator coil 162 may be wound around the stator core 161 in a state in which the insulator 163 is coupled to the stator core 161.

The insulator 163 may be formed of a material having electrical insulation properties. The insulator 163 may surround the stator core 161 so as to insulate the stator core 161 and the stator coil 162.

The stator 160 may further include an insertion portion 165 provided at a lower end of the insulator 163. The insertion portion 165 may be provided to be inserted into a controller.

The rotor 110 may include a rotor core 113 configured to rotate inside the stator 160. The rotor core 113 may be provided as a permanent magnet having magnetism, or may include a coil having electromagnetic properties. Accordingly, the rotor 110 may be configured to rotate by electromagnetically interacting with the stator 160. The rotor core 113 may be located on a middle portion of the rotor 110. In one embodiment of the present disclosure, it is assumed that the rotor core 113 is provided with a permanent magnet.

The motor 100 may include an impeller 140 provided to be coupled to the rotor 110 and configured to generate an air flow by being rotated by a rotation of the rotor 110.

The impeller 140 may include a rotor coupler 143 to which the rotor 110 is coupled. When the rotor 110 is coupled to the rotor coupler 143, the impeller 140 may rotate together with the rotor 110.

The impeller 140 may include a hub 141 and a plurality of blades 142 protruding from the hub 141 to form an air flow.

The hub 141 may be provided in such a way that a cross-sectional area thereof is reduced along an axial direction of the rotor 110. The hub 141 may be provided to discharge air, which flows in the axial direction, to a radial direction of the rotor 110. Particularly, the hub 141 may be provided in such a way that the cross-section area thereof is gradually reduced toward the upper side when the rotor 110 is arranged to extend in the up and down direction. In other words, the hub 141 may be formed to extend from an outer surface of a shaft coupler to allow the shaft coupler to be located at the center.

The impeller 140 may include the plurality of blades 142 protruding from one surface of the hub 141. The plurality of blades 142 may be provided to form an air flow by rotating together with the hub 141. The plurality of blades 142 may be provided on the outer surface of the hub 141. The plurality of blades 142 and the hub 141 may be provided integrally with each other.

By including the plurality of blades 142, the impeller 140 may be configured to move air, which flows from the upper side of the hub 141, to be discharged to the outside of the radial direction of the rotor 110.

The motor 100 may include a diffuser 150. The diffuser 150 may include a diffuser upper surface 153. The diffuser 150 may include a diffuser flow path 154. The diffuser flow path 154 may be formed along an outer circumference of the diffuser upper surface 153.

The diffuser 150 may include a diffuser vane 151. The diffuser vane 151 may be provided in plurality. The diffuser vanes 151 may be arranged to be inserted into the diffuser flow path 154.

The diffuser 150 may be disposed below the impeller 140. Therefore, air, which is discharged radially outward of the rotor 110 by the impeller 140, may flow into the diffuser flow path 154, and a direction of the air may be changed by the diffuser vane 151. Finally, the air may be discharged to the lower side of the diffuser 150. The diffuser 150 may include a housing coupler 152. A detailed description of the housing coupler 152 will be described later.

The motor 100 may include the housing 200. The housing 200 may be provided to accommodate the stator 160 and the impeller 140. The rotor 110 may be inserted into the housing 200 and be rotatable.

The housing 200 may include a base portion 210. The rotor 110 may be inserted into the base portion 210 and supported so as to rotate. Particularly, a first bearing hole 212 into which a first bearing 181 supporting the rotor 110 is inserted may be formed in the base portion 210.

The first bearing 181 may support a first side 111 of the rotor 110. The first side 111 of the rotor 110 may refer to the other end side of the rotor 110. The rotor 110 may be inserted into the first bearing hole 212 and rotatably supported by the first bearing 181.

A second bearing hole 215 into which a second bearing 182 supporting the rotor 110 is inserted may be formed in the base portion 210. The second bearing 182 may support a second side 112 of the rotor 110. The second side 112 of the rotor 110 may refer to one end of the rotor 110.

The rotor 110 may be inserted into the second bearing hole 215 and rotatably supported by the second bearing 182. The second bearing hole 215 may be spaced apart from the first bearing hole 212.

The first side 111 included in the rotor 110 may be positioned in an opposite direction to the second side 112 with respect to the rotor core 113.

The base portion 210 may be provided to accommodate the stator 160. Particularly, the base portion 210 may include a receiving space 213. The stator 160 may be seated in the receiving space 213 and accommodated in the base portion 210. A detailed description regarding a method in which the stator 160 is supported within a stator 160 seating groove will be described later.

The second bearing hole 215 may be disposed on one side of the receiving space 213. The stator 160 seated in the receiving space 213 may be seated to allow the rotor receiving portion 164 to face the second bearing hole 215.

The first bearing hole 212 may be disposed on the opposite side of the second bearing hole 215 with respect to the receiving space 213. The stator 160 seated in the receiving space 213 may be seated to allow the rotor receiving portion 164 to face the first bearing hole 212.

Accordingly, the rotor 110 inserted into the housing 200 may be disposed by passing through all of the second bearing hole 215, the stator 160, and the first bearing hole 212.

The base portion 210 may include a stator insertion hole 214 provided to communicate with the receiving space 213. The stator insertion hole 214 may be formed in a shape in which one side of the base portion 210 is open.

For example, the stator insertion hole 214 may be formed to be open on a lateral side of the base portion 210. For example, the stator insertion hole 214 may be formed to be open in a direction inclined with respect to a direction in which the rotor 110 extends. At this time, the direction in which the rotor 110 extends may be defined as a direction parallel to the direction in which a rotation center axis A of the rotor 110 extends.

The rotation center axis A of the rotor 110 may be provided to pass through a center b of the second bearing hole 215 and a center a of the first bearing hole 212.

In the drawings, it is illustrated that the stator insertion hole 214 is formed in a direction perpendicular to the direction in which the rotor 110 extends, but the stator insertion hole 214 is not limited thereto.

The motor 100 may include a cover member 170. The cover member 170 may be provided to cover the receiving space 213 and the stator insertion hole 214.

For example, the cover member 170 may be removably coupled to the base portion 210. For example, the cover member 170 may be provided to be coupled to some of a plurality of base connectors 2171 and 2172, which will be described later.

As the cover member 170 is coupled to some of the plurality of base connectors 2171 and 2172, the stator 160 may be stably seated in the receiving space 213.

For example, the stator insertion hole 214 may be defined as a space formed by the plurality of base connectors 2171 and 2172 spaced apart from each other.

The housing 200 may include a cover portion 220. The cover portion 220 may be provided to accommodate the impeller 140.

The cover portion 220 may include a cover body 221. The impeller 140 may be provided to be accommodated in the cover body 221. The cover body 221 may be provided in such a way that a cross-sectional area thereof is reduced along the axial direction of the rotor 110. Particularly, the cover body 221 may be provided in such a way that the cross-section area thereof is reduced toward the upper side when the rotor 110 is arranged to extend in the up and down direction.

The cover portion 220 may include a through-hole 222. The through-hole 222 may be formed to face the second bearing hole 215. A diameter of the through-hole 222 may be greater than a diameter of the second bearing hole 215, but this is only an example.

The rotor 110 inserted into the base portion 210 may be inserted into the through-hole 222 by passing through the second bearing hole 215. That is, a portion of the rotor 110 may be inserted into the cover portion 220 by passing through the through-hole 222. Accordingly, the rotor 110 may be coupled to the impeller 140 accommodated in the cover portion 220.

The cover portion 220 may include a diffuser coupling hole 224. The cover portion 220 may include a diffuser coupler 225. The housing coupler 152 of the diffuser 150 may be inserted into the diffuser coupling hole 224 of the cover portion 220.

When the housing coupler 152 is inserted into the diffuser coupling hole 224, the housing coupler 152 of the diffuser 150 may be in contact with the diffuser coupler 225 of the cover portion 220. For example, the housing coupler 152 may be inserted into the diffuser coupling hole 224 by a tight-fitting method. Accordingly, the diffuser 150 may be fixed to the cover portion 220. The impeller 140 may be disposed in an internal space that is formed as the cover portion 220 and the diffuser 150 are coupled to each other.

For example, the cover portion 220 may be formed integrally with the base portion 210. A detailed description regarding the fact that the cover portion 220 and the base portion 210 are formed integrally with each other will be described later.

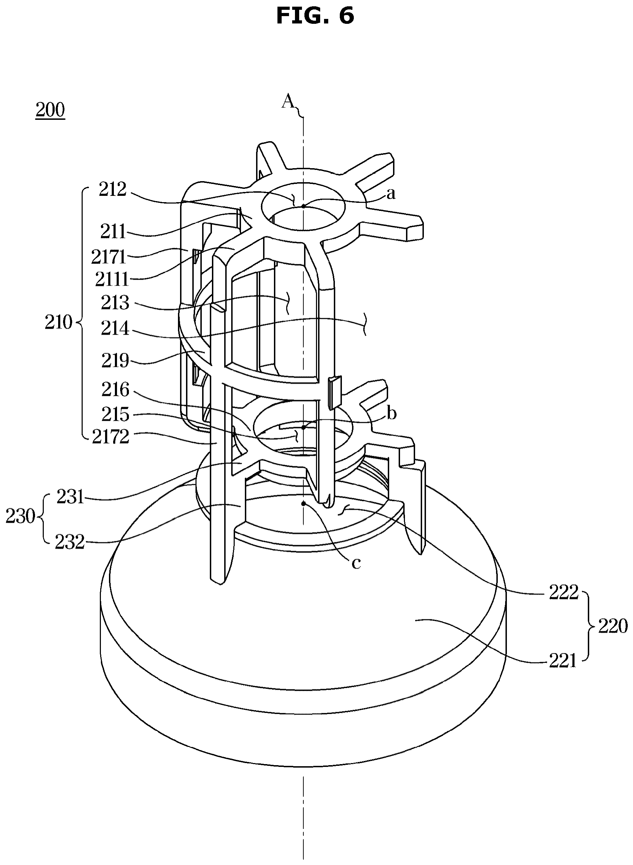

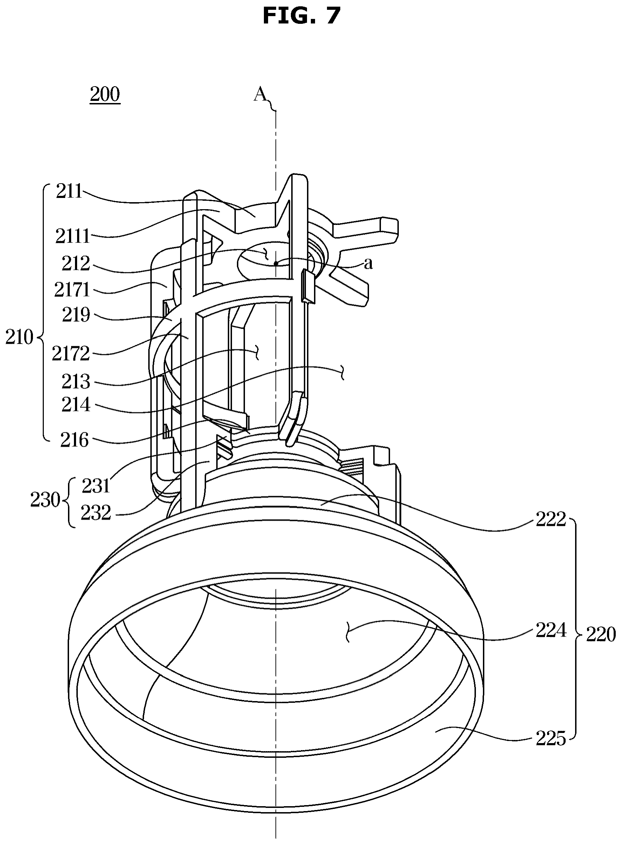

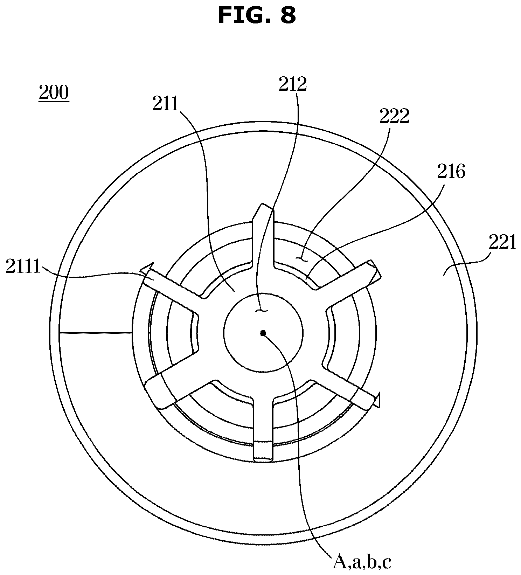

FIG. 6 is a view illustrating a housing according to one embodiment. FIG. 7 is a view illustrating the housing shown in FIG. 6 when viewed from another angle. FIG. 8 is a top view of the housing of FIG. 6.

Referring to FIGS. 6 to 8, the base portion 210 may include a second base portion 216. The second bearing hole 215 may be formed in the second base portion 216. The second bearing hole 215 may be formed at the center of the second base portion 216. The second base portion 216 may form a portion of the receiving space 213. Particularly, the second base portion 216 may form one side of the receiving space 213.

The housing 200 may include a plurality of connecting ribs 230. The plurality of connecting ribs 230 may be provided to connect the base portion 210 and the cover portion 220. Both ends of the plurality of connecting ribs 230 may be formed to protrude from the base portion 210 and the cover portion 220, respectively.

For example, the plurality of connecting ribs 230 may be formed integrally with the base portion 210 and the cover portion 220. For example, the base portion 210 and the cover portion 220 may be formed integrally with each other. For example, because the cover portion 220 is formed integrally with the base portion 210, it is possible to reduce a clearance that occurs when the cover portion 220 is separately assembled. Accordingly, it is possible to reduce interference between the housing 200 and the impeller 140 when the impeller 140 rotates.

One end 231 of the plurality of connecting ribs 230 protruding from the base portion 210 may be provided to protrude from the second base portion 216. A portion of the plurality of connecting ribs 230 that protrudes from the second base portion 216 may be defined as a first extension portion 231.

That is, the plurality of connecting ribs 230 may include the first extension portion 231. The first extension portion 231 may be formed to protrude in a radial direction of the second base portion 216. The first extension portion 231 may be provided in plurality.

The plurality of connecting ribs 230 may include a second extension portion 232. The second extension portion 232 may be connected to the first extension portion 231. The second extension portion 232 may extend toward the cover portion 220 and be fixed to the cover portion 220. In other words, the second extension portion 232 may be provided to protrude from the cover portion 220. The second extension portion 232 may be provided to protrude from the cover body 221.

The base portion 210 may include a first base portion 211. The first bearing hole 212 may be formed in the first base portion 211. The first bearing hole 212 may be formed at the center of the first base portion 211. The first base portion 211 may be formed to be spaced apart from the second base portion 216. The first base portion 211 may be formed to face the second base portion 216. The first base portion 211 may form a portion of the receiving space 213. Particularly, the first base portion 211 may form the other side of the receiving space 213.

The first base portion 211 may include a first base portion protruding rib 2111. The first base portion protruding rib 2111 may be formed to protrude in a radial direction of the first base portion 211. The first base portion protruding rib 2111 may be provided in plurality. The plurality of first base portion protruding ribs 2111 may be spaced apart from each other at the same distance and may be disposed on an outer circumference of the first base portion 211.

The base portion 210 may include the plurality of base connectors 2171 and 2172 provided to connect the second base portion 216 and the first base portion 211. Particularly, one end of the base connecting rib 2172 may be connected to the first extension portion 231. The other end of the base connecting rib 2172 may be connected to the first base portion protruding rib 2111. Accordingly, the second bearing hole 215 and the first bearing hole 212 may be formed integrally in the base portion 210.

As described above, because the second bearing hole 215 and the first bearing hole 212 are formed integrally in a single base portion 210, the rotor 110 may rotate stably.

Particularly, because the center b of the second bearing hole 215 and the center a of the first bearing hole 212 are disposed on the rotation center axis A of the rotor 110, the rotor 110 may be stably supported and rotated by the second bearing hole 215 and the first bearing hole 212.

Further, the center c of the through-hole 222 provided in the cover portion 220 may also be disposed on the rotation center axis A of the rotor 110. Accordingly, the stability of the rotation of the rotor 110 may be improved by minimizing an eccentricity when the rotor 110 rotates.

In addition, because the cover portion 220 in which the impeller 140 is accommodated is also formed integrally with the base portion 210, a coupling tolerance, etc. may be reduced compared to a case in which the impeller 140 and the housing 200 are manufactured separately and then coupled. Accordingly, it is possible to reduce interference between the impeller 140 and the housing 200.

The plurality of base connectors 2171 and 2172 may form the remaining portion of the receiving space 213.

The plurality of base connectors 2171 and 2172 may be arranged along the outer circumference of the second base portion 216 or the first base portion 211.

The base portion 210 may include a base connector support portion 219. The base connector support portion 219 may connect and support the plurality of base connectors 2171 and 2172. The plurality of base connectors 2171 and 2172 may be fixed by the base connector support portion 219, thereby supporting the stator 160 more stably.

In other words, the stator 160 may be supported by the plurality of base connectors 2171 and 2172 and the base connector support portion 219, and seated in the receiving space 213.

A portion 2172 of the plurality of base connectors 2171 and 2172 may be formed to extend from the plurality of connecting ribs 230. Particularly, the portion 2172 of the plurality of base connectors 2171 and 2172 may be formed to extend from the second extension portion 232.

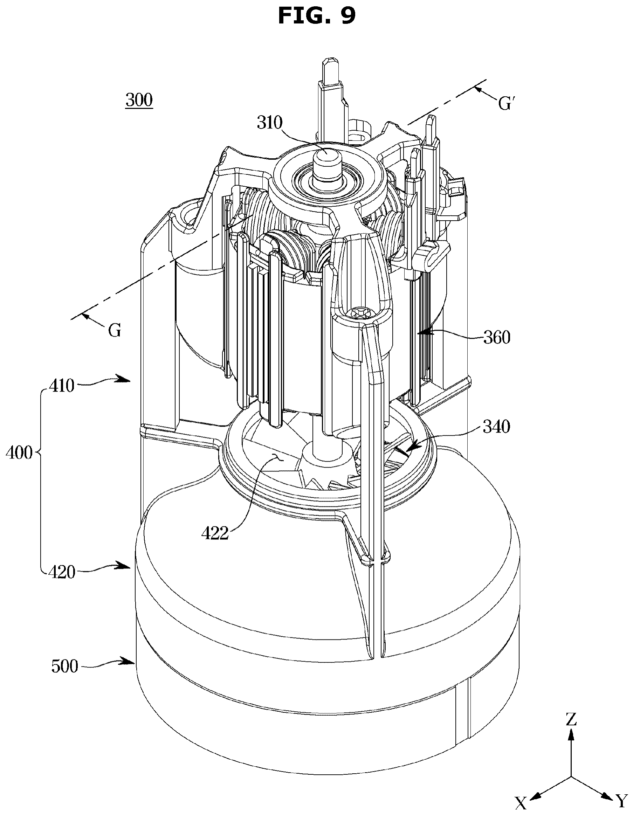

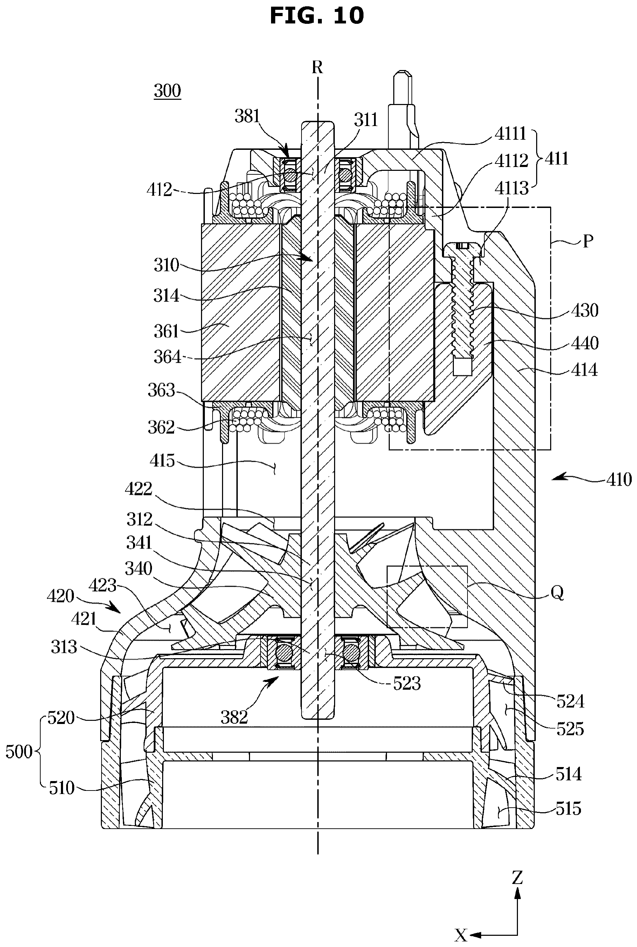

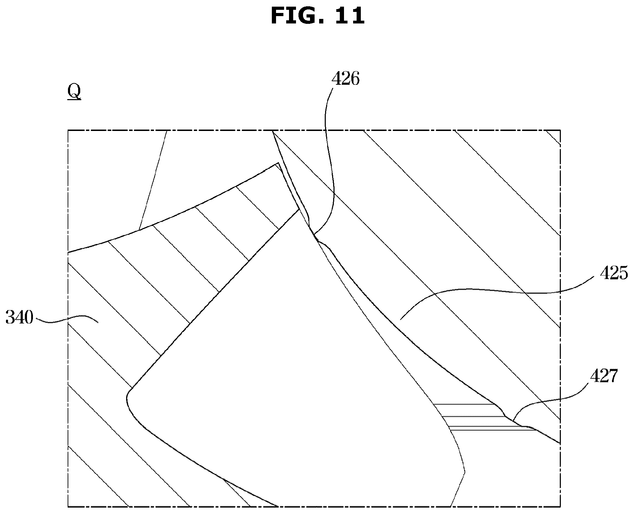

FIG. 9 is a view illustrating a motor according to one embodiment. FIG. 10 is a cross-sectional view taken along a line G-G' of the motor according to one embodiment. FIG. 11 is an enlarged view of a portion Q of FIG. 10. A description the same as the above description will be omitted.

Referring to FIGS. 9 to 11, a cleaner 2 according to one of various embodiments may include a motor 300. There is no limitation in the type of cleaner 2. For example, the motor 300 may be used in a stick vacuum cleaner 2 or an upright vacuum cleaner 2.

Further, the motor 300 may be applied to various home appliances in addition to the cleaner 2. Hereinafter the description will be described with reference to the stick vacuum cleaner 2 including the motor 300.

As mentioned above, the cleaner 2 may include the motor 300. The motor 300 may generate power to generate a suction force within the main body 12. The motor 100 may be provided to form a suction airflow that is from the suction head 16 into the inside of the main body 12.

The motor 300 may include a stator 360, a rotor 310, and a housing 400 provided to accommodate the stator 360 and the rotor 310.

The stator 360 may include a stator core 361, a stator coil 362, an insulator 363, and a rotor receiving portion 364. The stator 360 may be configured to generate magnetic flux when a current is applied to the stator coil 362.

The rotor receiving portion 364 for inserting and accommodating the rotor 310 may be provided in a central portion of the stator core 361. The rotor 310 may be disposed in the rotor receiving portion 364. The rotor 310 may interact electromagnetically with the stator 360.

The stator coil 362 may be wound around the stator core 361 in a state in which the insulator 363 is coupled to the stator core 361.

The insulator 363 may be formed of a material having electrical insulation properties. The insulator 363 may surround the stator core 361 so as to insulate the stator core 361 and the stator coil 362.

The rotor 310 may include a rotor shaft 312 forming an exterior and a rotor core 314 configured to rotate inside the stator 360. For example, the rotor shaft 312 may be formed in a shape that extends in the up and down direction (+-Z direction) and formed in a straight shape without a curved portion.

The rotor core 314 may be provided to be inserted into the rotor shaft 312. The rotor shaft 312 may rotate based on a rotation center axis R of the rotor 310.

The rotor core 314 may be provided as a permanent magnet having magnetism, or may include a coil having electromagnetic properties. Accordingly, the rotor 310 may be configured to rotate by electromagnetically interacting with the stator 360. The rotor core 314 may be located in a middle portion of the rotor 310. In one embodiment of the present disclosure, it is assumed that the rotor core 314 is provided with a permanent magnet.

The motor 300 may include an impeller 340 provided to be coupled to the rotor 310 and configured to generate an air flow by being rotated by a rotation of the rotor 310.

The impeller 340 may include a hub 342 and a plurality of blades 343 protruding from the hub 343 to form an air flow.

The hub 342 may be provided in such a way that a cross-sectional area thereof is reduced along an axial direction of the rotor 310. The hub 342 may be provided to discharge air, which flows in the axial direction, to a radial direction of the rotor 310. Particularly, the hub 342 may be provided in such a way that the cross-section area thereof is reduced toward the upper side when the rotor 310 is arranged to extend in the up and down direction.

The impeller 340 may include an impeller coupling hole 341 into which the rotor shaft 312 is inserted. The impeller coupling hole 341 may be formed to allow the rotor 310 to penetrate in the up and down direction.

The impeller 340 may include the plurality of blades 343 protruding from one surface of the hub 342. The plurality of blades 343 may be provided to form an air flow by rotating together with the hub 342. The plurality of blades 343 may be provided on an outer surface of the hub 342. The plurality of blades 343 and the hub 342 may be provided integrally with each other.

By including the plurality of blades 343, the impeller 340 may be configured to move air, which flows from the upper side of the hub 342, to be discharged to the outside of the radial direction of the rotor 310.

The impeller 340 may include the impeller coupling hole 341 formed in the hub 342 and provided to allow the rotor 310 to be inserted thereinto. The impeller coupling hole 341 may be formed in the hub 342 to penetrate the impeller 340 in the up and down direction.

The rotor 310 may penetrate the hub 342 by passing through the impeller coupling hole 341 and then fixed to the hub 342 at an appropriate position. For example, the rotor 310 may penetrate the impeller 340, and the impeller 340 may be located between a first side 311 and a second side 313 of the rotor 310. For example, the first side 311 of the rotor 310 may refer to one side of the rotor 310 adjacent to one end of the rotor 310 facing upward, and the second side 313 may refer to the other side of the rotor 310 adjacent to the other end of the rotor 310 facing downward (-Z direction).

As the rotor 310 is fixed to the hub 342, the impeller 340 may be rotated by the rotation of the rotor 310.

The motor 300 may include a housing 400. The housing 400 may be provided to accommodate the stator 360, the impeller 340, and the rotor 310. The rotor 310 may be rotatably supported by the housing 400 and accommodated in the housing 400.

The housing 400 may include a support portion 410 provided to form a portion of an exterior. The support portion 410 may include a cover portion 420 provided to form a remaining portion of the exterior. The support portion 410 and the cover portion 420 may be formed integrally with each other. A detailed description thereof will be described later.

The rotor 310 may be inserted into the support portion 410. The support portion 410 may support the first side 311 of the rotor 310 to allow the rotor 310 to rotate. The stator 360 may be accommodated in the support portion 410.

The support portion 410 may include a base portion 411 provided to form a portion of an exterior thereof. The base portion 411 may form a portion of an upper portion of the support portion 410.

The base portion 411 may include a first base portion 4111 in which a first bearing hole 412 supporting the rotor 310 is formed, a second base portion 4113 to which a support member 440 supporting the stator 360 is connected, and a third base portion 4112 connecting the first base portion 4111 and the second base portion 4113.

The base portion 411 may include the first bearing hole 412 in which a first bearing 381 supporting the first side 311 of the rotor 310 is accommodated. Particularly, the first bearing hole 412 may be formed in the first base portion 4111 to support the rotation of the rotor 310.

For example, the first bearing hole 412 may be formed in the center of the first base portion 4111. The first bearing 381 may be inserted into the first bearing hole 412 to rotatably support the rotor 310.

The support member 440 supporting the stator 360 may be coupled to the second base portion 4113. A detailed description thereof will be described later.

The third base portion 4112 may extend from the first base portion 4111 and the second base portion 4113 so as to connect the first base portion 4111 and the second base portion 4113.

For example, the second base portion 4113 may be located below the first base portion 4111, and the third base portion 4112 may extend downward to connect the first base portion 4111 and the second base portion 4113.

For example, the second base portion 4113 may include a plurality of second base portions 4113 arranged along a circumference of the first housing 400. The third base portion 4112 may include a plurality of third base portions 4112 extending from each second base portion 4113.

The plurality of third base portions 4112 may each be connected to the first base portion 4111 to connect the second base portion 4113 to the first base portion 4111.

The motor 300 may include a plurality of connecting ribs 414 extending downward from the base portion 411. For example, the plurality of connecting ribs 414 may form a portion of a lower portion of the support portion 410.

The plurality of connecting ribs 414 may extend downward from the second base portion 4113. The plurality of connecting ribs 414 may be connected to the cover portion 420. In other words, the base portion 411 and the cover portion 420 may be connected through the plurality of connecting ribs 414.

The base portion 411 of the support portion 410 may be supported against the cover portion 420 by the plurality of connecting ribs 414.

For example, the plurality of connecting ribs 414 may be provided to extend from the plurality of cover portions 420, respectively.

The support portion 410 may include a receiving space 415 surrounded by the base portion 411 and the plurality of connecting ribs 414. For example, the base portion 411 may include the receiving space 415. For example, the stator 360 and the rotor 310 may be accommodated in the receiving space 415. The base portion 411 may form a portion of an upper portion of the receiving space 415.

The plurality of connecting ribs 414 may be arranged to be spaced apart in a substantially circular shape along an outer circumference of the base portion 411 to form a side portion of the receiving space 415. As will be described later, the stator 360 may be inserted into a stator insertion hole 416, which is defined as a space formed by the plurality of connecting ribs 414 that are spaced apart from each other. Accordingly, the stator 360 may be accommodated in the receiving space 415.

The support portion 410 may include a support member 440 provided to support the stator 360. The support member 440 may be disposed inside the support portion 410. The support member 440 may be disposed in the receiving space 415.

For example, the support member 440 may be provided to be coupled to the second base portion 4113. For example, when the support member 440 is coupled to the second base portion 4113, one surface of the support member 440 may be supported by the plurality of connecting ribs 414.

The support member 440 may be coupled to the support portion 410 so as to support the stator 360 accommodated in the receiving space 415. The stator 360 may be seated in the receiving space 415 by the support member 440. A detailed description of the support member 440 will be described later.

The housing 400 may include the cover portion 420. For example, the cover portion 420 may be formed integrally with the support portion 410. The cover portion 420 may be located below the support portion 410. The cover portion 420 may be provided to accommodate the impeller 340.

The cover portion 420 may include a cover body 421 provided to form an exterior. The cover body 421 may have an approximately hemispherical shape. The impeller 340 may be accommodated inside the cover body 421.

The cover portion 420 may be provided to accommodate a portion of the rotor 310. Particularly, the rotor 310, in which the first side 311 is supported by the first bearing 381, may extend downward to allow the second side 313 to be located in an interior 423 of the cover portion.

The cover portion 420 may include a through-hole 422 that is open toward the support portion 410 in order that the second side 313 of the rotor 310 is inserted into the interior 423 of the cover portion.

For example, the through-hole 422 may have a circular shape. The through-hole 422 may be formed on an upper surface of the cover body 421. The through-hole 422 may communicate with the interior 423 of the cover portion. The through-hole 422 may communicate with the receiving space 415 of the support portion 410.

The rotor 310 passing through the first bearing hole 412 may continue to extend downward, pass through the through-hole 422, and then be coupled to the impeller 340 within the cover portion 423. For example, one end of the rotor 310 facing downward may pass through the impeller 340 and then protrude out of the impeller 340.

The cover portion 420 may include protruding ribs 426 and 427 provided to adjust a clearance between the impeller 340 and the cover portion 420. For example, the protruding ribs 426 and 427 may be formed to protrude from an inner surface of the cover body 421 toward an inner side of the cover body 421.

For example, the protruding ribs 426 and 427 may be formed to extend along an inner circumferential surface 425 of the cover portion. Accordingly, the protruding ribs 426 and 427 may be a substantially circular protrusion protruding from the inner surface of the cover body 421 toward the inner side of the cover body 421.

When the impeller 340 is accommodated in the interior 423 of the cover portion and covered by the cover body 421, the impeller 340 may be disposed at a position in contact with the protruding ribs 426 and 427. In other words, the impeller 340 may be fixed to the rotor 310 at a position in which the impeller 340 is in contact with the protruding ribs 426 and 427.

For example, a height at which the protruding ribs 426 and 427 protrude may range from approximately 0.1 mm to 015 mm. Accordingly, the impeller 340 may be disposed at a position spaced apart from the inner surface of the cover body 421 by approximately 0.1 mm to 015 mm. By the protruding ribs 426 and 427, a distance between the impeller 340 and the cover body 421 may be adjusted to be small as described above, and the efficiency of the motor 300 may be increased.

The protruding ribs 426 and 427 may include a plurality of protruding ribs 426 and 427. The plurality of protruding ribs 426 and 427 may be arranged to be spaced apart from each other. The impeller 340 may be fixed to the rotor 310 at a position in which the impeller 340 is in contact with all of the plurality of protruding ribs 426 and 427.

The motor 300 may include a housing cover 500 provided to cover the housing 400. For example, the housing cover 500 may be coupled to the cover portion 420 to cover the housing 400. For example, the housing cover 500 may be a diffuser configured to spray air uniformly, but is not limited thereto.

Particularly, the housing cover 500 may include a first cover 510 provided to be directly coupled to the cover portion 420 and a second cover 520 accommodated in the first cover 510.

The second cover 520 may be coupled to the first cover 510. When the first cover 510 is coupled to the cover portion 420, the second cover 520 may be accommodated in the interior 423 of the cover portion.

For example, the second cover 520 may be located above the first cover 510. In other words, the second cover 520 may be disposed closer to one end of the rotor 310, which passes through the through-hole 422, than the first cover 510.

The housing cover 500 may include a second bearing hole 523 in which the second bearing 382 provided to rotatably support the rotor 310 is accommodated. The second bearing hole 523 may be formed in the second cover 520. For example, the second bearing hole 523 may be formed on a second cover upper surface 522 facing the through-hole 422. The second bearing hole 523 may be formed in the center of the second cover upper surface 522.

The second bearing 382 may be inserted into the second bearing hole 523. The second side 313 of the rotor 310 may be accommodated in the second bearing hole 523 and rotatably supported by the second bearing 382. The first side 311 of the rotor 310 may be supported on the first bearing 381, and the second side 313 of the rotor 310 may be supported on the second bearing 382. Accordingly, the rotor 310 may be rotatably disposed in the housing 400.

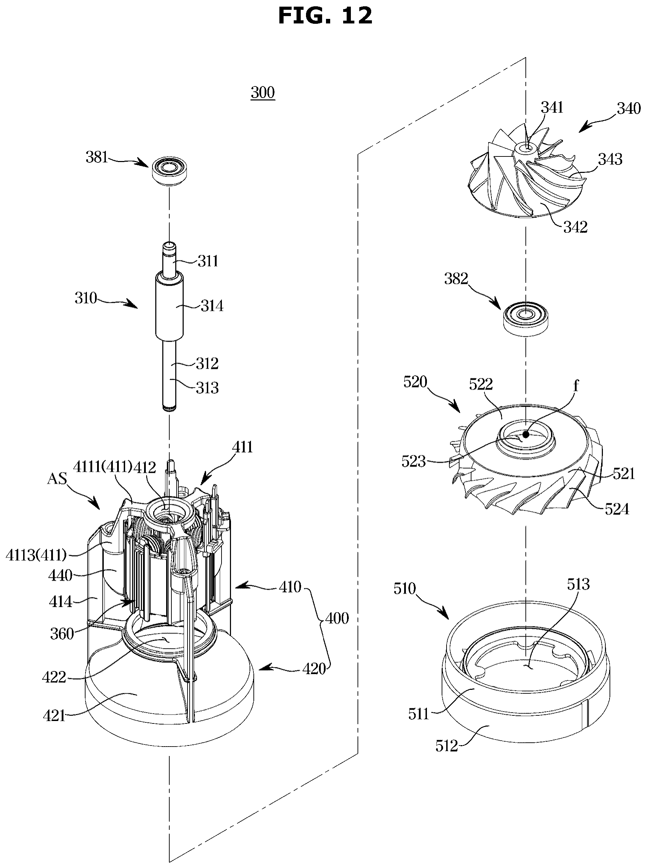

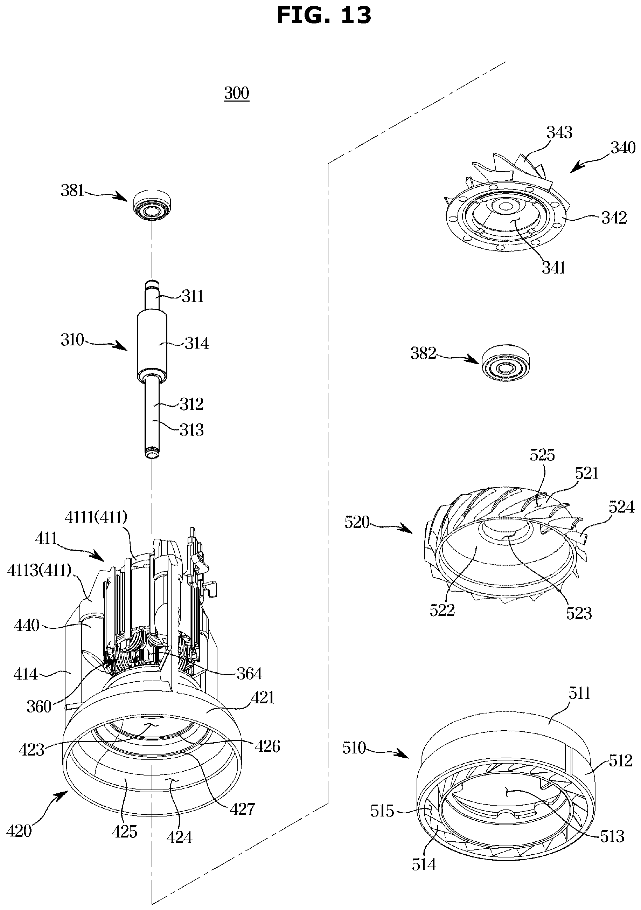

FIG. 12 is an exploded view of the motor according to one embodiment. FIG. 13 is a view illustrating the exploded view of FIG. 12 when viewed from another angle.

A state, in which the housing 400 is coupled to the stator 360, may be referred as a housing assembly (AS). Hereinafter the arrangement relationship of each component of the motor 300 will be described with reference to the drawings.

Referring to FIGS. 12 and 13, the rotor 310 may include the rotor shaft 312 extending in the up and down direction and excluding a curved portion, and the rotor core 314 coupled to the rotor shaft 312. For example, the rotor core 314 may be disposed between the first side 311 and the second side 313 of the rotor 310.

The rotor 310 may be inserted into an inside of the housing assembly (AS) by sequentially passing through the first bearing hole 412, the rotor receiving portion 364, the receiving space 415, the through-hole 422, the impeller coupling hole 341, and the second bearing hole 523 of the housing assembly (AS).

The first bearing 381 may be installed in the first bearing hole 412 located on an upper side of the housing assembly (AS). The rotor 310 may be inserted into the housing assembly (AS), and the first side 311 may be rotatably supported on the first bearing 381.

The rotor core 314 may be seated in the rotor receiving portion 364 formed at the center of the stator 360. Therefore, when a current is applied to the stator coil 362 and magnetic flux is generated, the rotor core 314 formed of a permanent magnet may interact with the stator 360 more effectively.

The second side 313 of the rotor 310 may pass through the through-hole 422 and be disposed in the interior 423 of the cover portion. As will be described later, the second side 313 may be rotatably supported by the second bearing 382.

The impeller 340 may be inserted into the interior 423 of the cover portion 420 from the lower side. The rotor 310 may pass through the impeller coupling hole 341 that penetrates the hub 342 of the impeller 340 in the up and down direction. The second side 313 may pass through the impeller 340 and be located below the impeller 340.

The impeller 340 may be arranged to be in contact with the protruding ribs 426 and 427 formed on the inner surface of the cover body 421. In other words, the impeller 340 may be fixed to the rotor shaft 312 at a position in which the impeller 340 is in contact with the protruding ribs 426 and 427.

Because the rotor shaft 312 is formed in a straight outer shape without a separate curved portion that is to couple the impeller 340, the impeller 340 may be fixed at any position on the rotor shaft 312. Accordingly, the impeller 340 may be fixed to the rotor 310 at a position in which the impeller 340 is in contact with the protruding ribs 426 and 427.

When the impeller 340 is accommodated in the cover portion 420, the housing cover 500 may be coupled to the housing 400. Particularly, the first cover 510 of the housing cover 500 may be coupled to the cover portion 420.

The first cover 510 may include a first cover body 512 forming an exterior and a housing coupler 511 provided to be in contact with the inner surface 425 of the cover body. The first cover body 512 may have a substantially hollow cylinder shape, but is not limited thereto.

The housing coupler 511 may be formed to protrude from the first cover body 512. For example, the housing coupler 511 may be a portion of the first cover body 512.

For example, the housing coupler 511 may include an outer surface extending along the inner surface 425 of the cover body so as to have a shape corresponding to the shape of the inner surface 425 of the cover body.

For example, the cover body 421 of the cover portion 420 may be formed to allow a cross section in the left and right direction (+- direction) to have a circular shape. An inner circumferential surface of the circle may be the inner surface 425 of the cover body. For example, the housing coupler 511 may be formed to allow a cross section in the left and right direction to have a circular shape. An outer circumferential surface of the circle may be the outer surface of the housing coupler 511.

The cover portion 420 and the housing coupler 511 may be coupled to each other to allow a center of the circle formed by the cross section of the cover portion 420 and a center of the circle formed by the cross section of the housing coupler 511 to be disposed on a coaxial axis R.

In other words, an inner diameter of the circle formed by the cross section of the cover portion 420 and an outer diameter of the circle formed by the cross section of the housing coupler 511 may match.

The first cover 510 may include a first cover hole 513 formed therein. The first cover hole 513 may be formed surrounded by the first cover body 512. The second cover 520 may be accommodated in the first cover hole 513.

The first cover 510 may include a first cover flow path 515 and a first cover vane 514. The first cover flow path 515 may be formed on a lower side of the first cover body 512 and along an inner circumference of the first cover body 512. The first cover vane 514 may be provided to be inserted into the first cover flow path 515. The first cover vane 514 may include a plurality of first cover vanes 514.

The housing cover 500 may include the second cover 520. The second cover 520 may include a second cover body 521 forming an exterior, and a second cover vane 524 formed on an outer surface of the second cover body 521. The second cover vane 524 may include a plurality of second cover vanes 524. The second cover vanes 524 may be arranged on the outer surface of the second cover body 521. A second cover flow path 525 may be formed between the second cover vanes 524.

The second cover 520 may include the second bearing hole 523 into which the second bearing 382 is inserted. The second bearing 382 may rotatably support the second side 313 of the rotor 310.

The second bearing hole 523 may be formed on the upper surface of the second cover body 521. The upper surface of the second cover body 521 may refer to one surface facing the through-hole 422 of the cover portion 420. The second bearing hole 523 may be formed in a center of the upper surface of the second cover body 521.

When the second cover 520 is accommodated in the first cover 510, the second bearing hole 523 of the second cover 520 may be disposed at the center of the first cover body 512. In other words, the center f of the second bearing hole and the center of the circle formed by the cross section of the housing coupler 411 may be arranged on the coaxial axis R.

In conclusion, the center f of the second bearing hole and the center of the circle formed by the cross section of the cover portion 420 may be coupled to be disposed on the coaxial axis R.

As will be described later, the through-hole 422 and the center d of the first bearing hole are arranged on the coaxial axis R, and the center of the circle formed by the cross section of the cover portion 420 and the center e of the through-hole are arranged on the coaxial axis R. Accordingly, the center d of the first bearing hole, the center e of the through-hole, and the center f of the second bearing hole may all be disposed on the coaxial axis R. The above-mentioned coaxial axis R may be the rotation center axis R of the rotor 310.

Air, which is discharged from the impeller 340 to the radial direction of the rotor 310 by the rotation of the impeller 340, may flow into the second cover flow path 525 and may change the flow direction by the second cover vane 524 and then transmitted to the first cover 510.

Air transmitted to the first cover 510 may be moved into the first cover flow path 515, guided by the first cover vane 514, and finally discharged to the lower side of the housing 400 body.

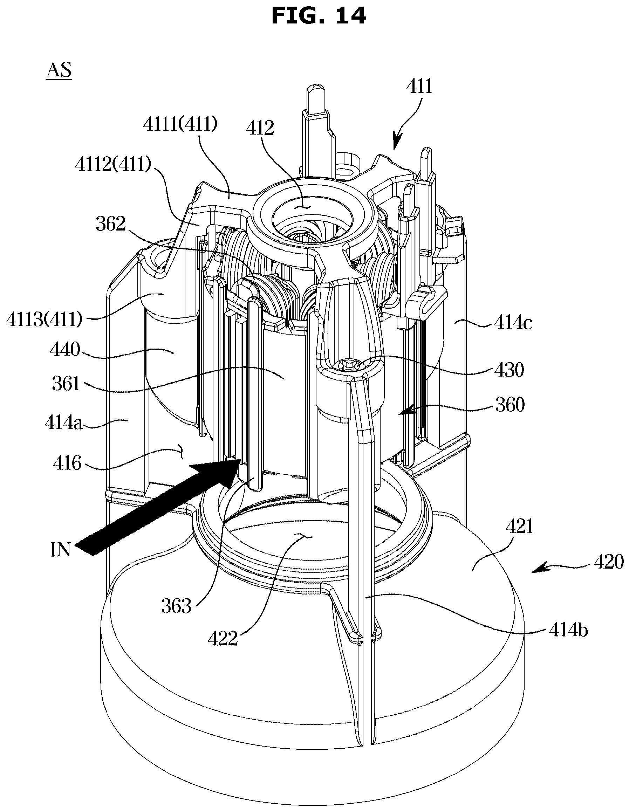

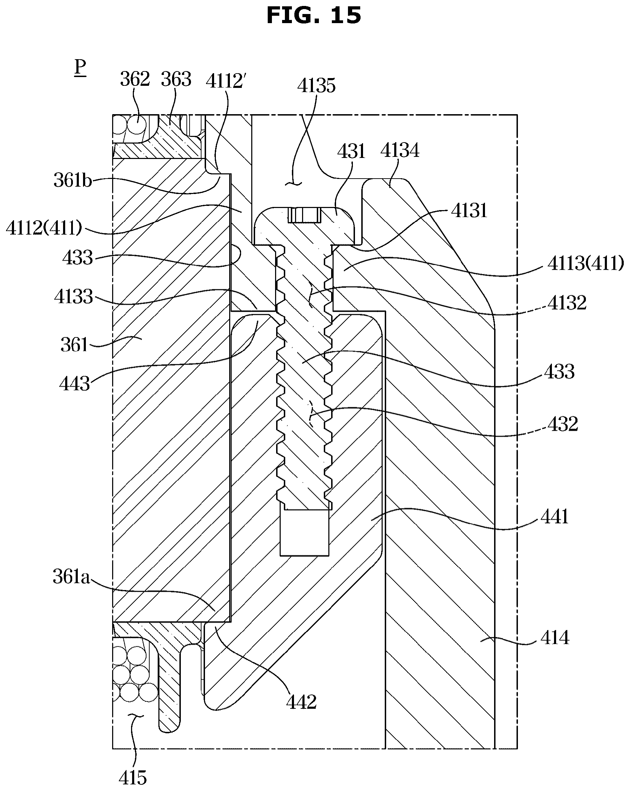

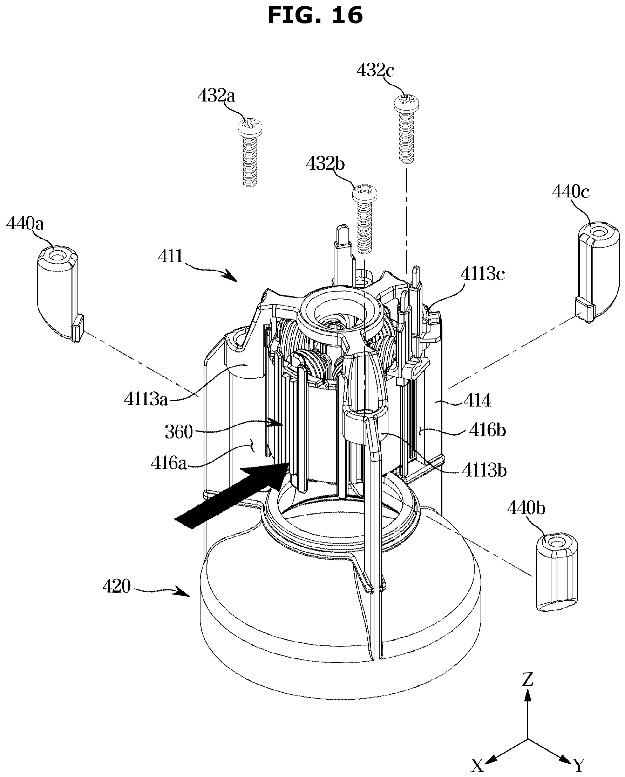

FIG. 14 is a view illustrating a housing and a stator in the motor according to one embodiment. FIG. 15 is an enlarged view of a portion P of FIG. 10. FIG. 16 is a view illustrating a state in which a support member and a coupling member are separated in FIG. 14.

Referring to 14 to 16, the support portion 410 may include the support member 440 provided to allow the stator 360 to be seated in the receiving space 415. The support member 440 may be disposed inside the support portion 410. The support member 440 may be removably coupled to the base portion 411 of the support portion 410. Particularly, the support member 440 may be removably coupled to the second base portion 4113.

For example, the stator 360 may be inserted into the support portion 410 through the stator insertion hole 416 formed by the plurality of connecting ribs 414 spaced apart from each other.

The stator insertion hole 416 may be formed to be open outward even when the support portion 410 and the cover portion 420 are integrally formed with each other. For example, because a plurality of spaces formed by the plurality of connecting ribs 414 spaced apart may be provided, the stator insertion hole 416 may also include a plurality of stator insertion holes 416.

The stator 360 may be inserted into the support portion 410 from the outside even when the support portion 410 and the cover portion 420 are integrally formed with each.

That is, during a process of integrally molding the support portion 410 and the cover portion 420, the stator 360 may not be placed inside in advance. Accordingly, the first bearing hole 412 formed in the support portion 410 and the center e of the through-hole formed in the cover portion 420 may be relatively precisely disposed on the coaxial axis R. As will be described later, the coaxial axis R may be the rotation center axis R of the rotor 310. A detailed description thereof will be described later.

The stator 360 inserted into the stator insertion hole 416 may be disposed in the receiving space 415 formed inside the support portion 410.

For example, the second base portion 4113 may include an insertion hole 4132 into which a coupling member 430 is inserted. The insertion hole 4132 may be formed to penetrate the second base portion 4113 in the up and down direction.

The second base portion 4113 may include a second base protrusion 4134 provided to protrude upward. The second base protrusion 4134 may form a second base groove 4135 together with the third base portion 4112. The second base groove 4135 may be formed in a space between the third base portion 4112 and the second base protrusion 4134.

The second base groove 4135 may communicate with the insertion hole 4132. Accordingly, the coupling member 430 may be inserted into the second base groove 4135 and pass through the insertion hole 4132.

The coupling member 430 may include a coupling head 431 and a coupling body 433 extending from the coupling head 431. For example, the coupling member 430 may be a screw, and the coupling head 431 may be a screw head. Further, the coupling body 433 may be a screw body.

The coupling body 433 may pass through the insertion hole 4132. When the coupling body 433 passes through the insertion hole 4132, a lower surface of the coupling head 431 may be supported by a coupling member support portion 4131 formed by the second base portion 4113.

When the lower surface of the coupling head 431 is supported by the coupling member support portion 4131, a height at which the coupling head 431 protrudes from the coupling member support portion 4131 may be less than a height at which second base protrusion 4134 protrudes from the coupling member support portion 4131. Accordingly, by the second base protrusion 4134, the coupling head 431 may be protected from external friction.

The support member 440 may include a support block 441 forming an exterior and a support protrusion 442 formed to protrude from one side of the support block 441.

The support block 441 may be formed to extend along a longitudinal direction of the plurality of connecting ribs 414, and may form a coupling hole 432 into which the coupling body 433 is inserted.

For example, the coupling hole 432 may be formed in a recessed form on one side of the support block 441, but this is only an example. Alternatively, the coupling hole 432 may be formed to penetrate the support block 441.

The support block 441 may be arranged to allow one side, in which the coupling hole 432 is recessed, to face the insertion hole 4132 of the second base portion 4113.

Thereafter, the coupling member 430 may pass through the insertion hole 4132 of the second base portion 4113 and be inserted and fixed into the coupling hole 432 of the support block 441. Accordingly, the support member 440 may be coupled to the base portion 411.

An upper surface 443 of the support block may be arranged to face a lower surface 4133 of the second base portion. For example, in the process in which the coupling member 430 corresponding to a screw is inserted into the coupling hole 432, the support member 440 may move upward, and thus the upper surface 443 of the support block and the lower surface 4133 of the second base portion may be closer.

The support protrusion 442 may be formed to protrude from one side of the base portion 411 toward the receiving space 415. The support protrusion 442 may be formed at one end, which is in a downward direction toward the cover portion 420, of the support block 441.

Because the support protrusion 442 protrudes from the lower end of the support block 441 toward the receiving space 415, the lower surface of the stator 360 may be supported by the support protrusion 442. Particularly, a lower surface 361b of the stator core may be supported by the support protrusion 442. Accordingly, the stator 360 may be seated inside the receiving space 415.

The third base portion 4112 may include a support groove 4112' formed to support an upper surface 361a of the stator core. The support groove 4112' may be formed on one inner surface of the third base portion(4112).

In the process in which the coupling member 430 is inserted into the coupling hole 432, the support member 440 may move upward, and thus the stator 360 may also gradually move upward by being supported by the support protrusion 442.

Thereafter, when the upper surface 361a of the stator core is in contact with the support groove 4112', the movement of the support member 440 may be stopped, and the stator core 361 may be stably supported between the support groove 4112' and the support protrusion 442.

For example, the support member 440 may include the plurality of support members 440 and the plurality of coupling members 430 coupled to each of the plurality of support members 440. The plurality of support members 440 and the plurality of coupling members 430 may be arranged to correspond to the plurality of connecting ribs 414, respectively.

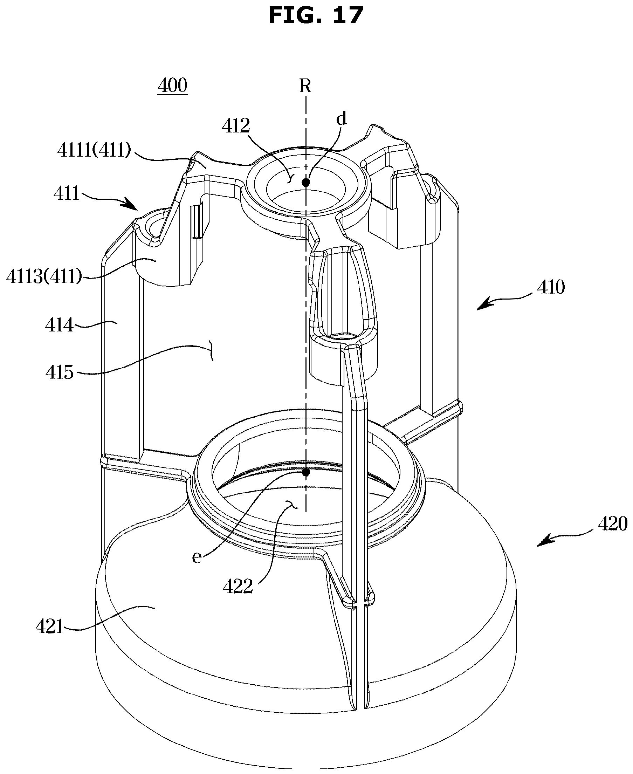

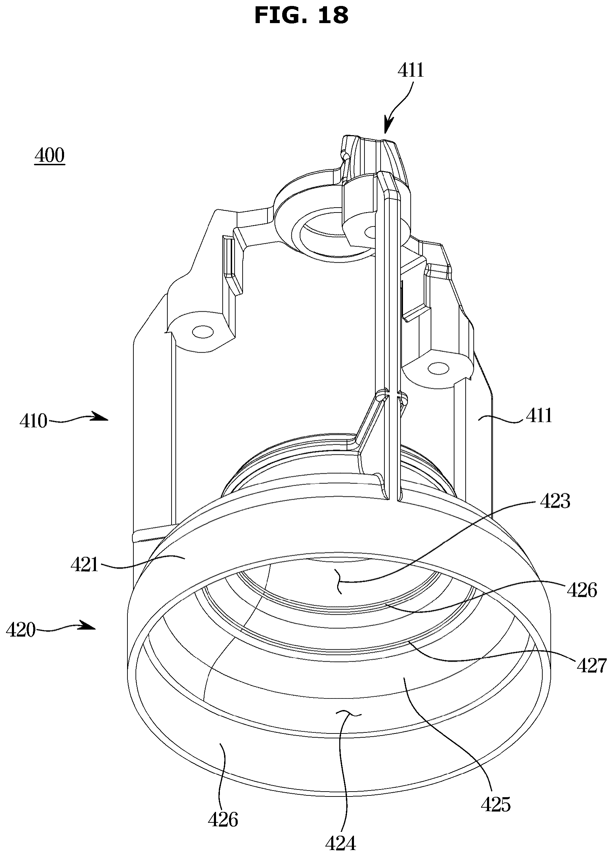

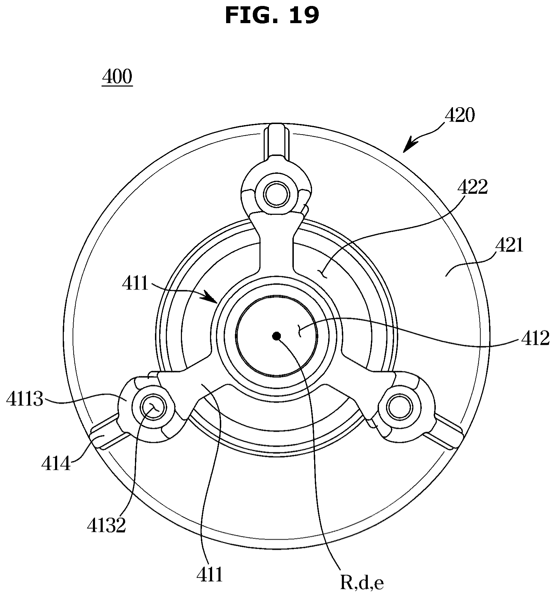

FIG. 17 is a view illustrating a housing in the motor according to one embodiment. FIG. 18 is a view illustrating FIG. 17 when viewed from another angle. FIG. 19 is a view illustrating FIG. 17 when viewed from another angle.

Referring to FIGS. 17 to 19, the support portion 410 and the cover portion 420 may be formed integrally with each other. By forming the support portion 410 and the cover portion 420 as one piece, it is possible to reduce a tolerance caused by the assembly compared to a case in which the support portion 410 and the cover portion 420 are formed separately and then assembled.

Because it is possible to reduce the tolerance caused by the assembly, the first bearing hole 412 formed in the support portion 410 and the center e of the through-hole formed in the cover portion 420 may more effectively arranged on the coaxial axis R. The above-described coaxial axis R may be the rotation center axis R of the rotor 310.

That is, because the support portion 410 and the cover portion 420 are formed as one piece, the assembly tolerance may not occur. Accordingly, the center d of the first bearing hole and the center e of the through-hole may be arranged on the rotation center axis R. Therefore, the efficiency of the motor 300 may be increased.

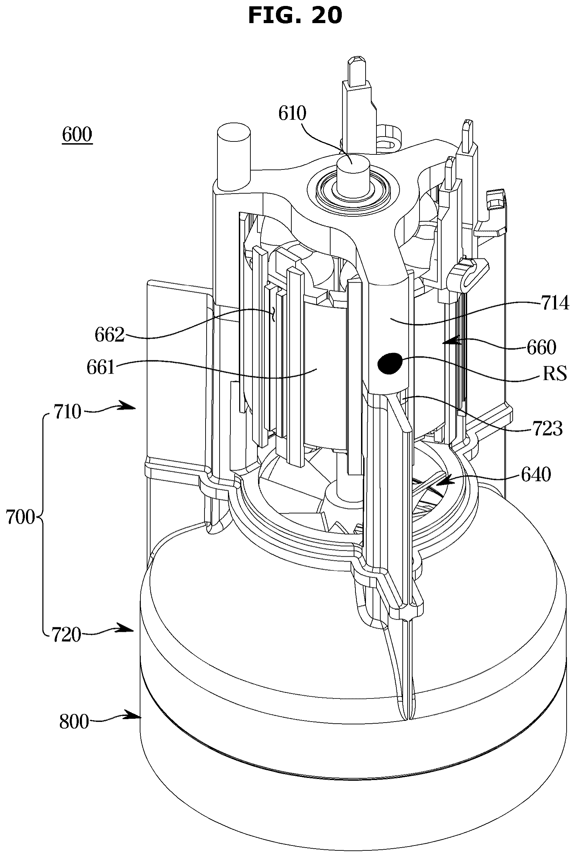

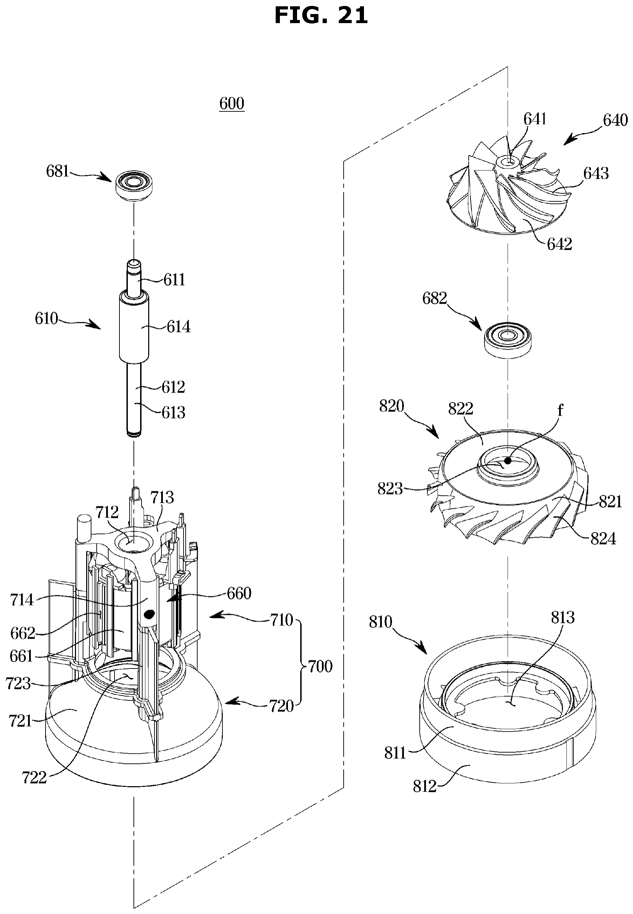

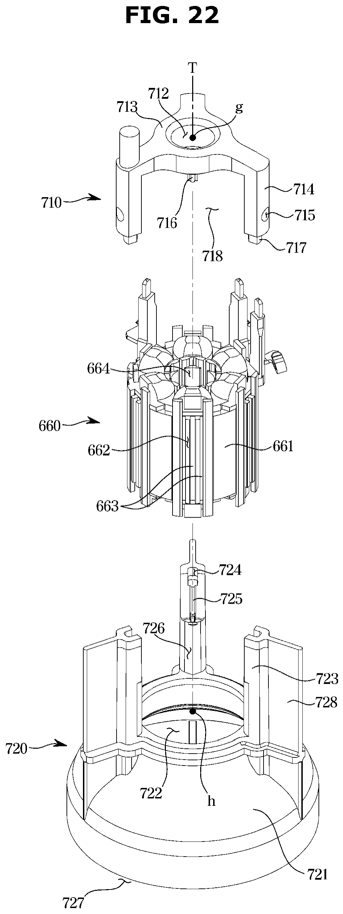

FIG. 20 is a view illustrating a motor according to one embodiment. FIG. 21 is an exploded view of the motor according to one embodiment. FIG. 22 is a view illustrating a housing and a stator separated from the motor according to one embodiment. Hereinafter a description the same as the above description will be omitted.

Referring to FIGS. 20 to 22, a cleaner 3 may include a motor 600. The motor 600 may include a housing 700 and a housing cover 800 coupled to the housing 700 so as to cover a portion of a lower portion of the housing 700. For example, the housing cover 800 may be a diffuser provided to spray air uniformly, but is not limited thereto.

The housing 700 may be provided to accommodate a stator 660, an impeller 640, and a rotor 610.

The housing 700 may include a base portion 710 provided to form a portion of an exterior, and a cover portion 720 provided to be coupled to the base portion 710 and provided to form a remaining portion of the exterior.

The base portion 710 may include a first bearing hole 712 into which a first bearing 681 supporting a first side 611 of the rotor 610 is inserted. For example, the first bearing hole 712 may be formed at a center of a first base 713 to penetrate the first base 713.

The base portion 710 may include a first connecting rib 714 provided to protrude from the first base 713 and extend downward. For example, the first connecting rib 714 may include a plurality of first connecting ribs 714 arranged along an outer circumference of the first base 713.

The base portion 710 may include an injection hole 715 (refer to FIG. 22) formed to penetrate the first connecting rib 714. A resin (RS) may be inserted into the injection hole 715 to allow the cover portion 720 and the base portion 710 to be coupled and integrated with each other. For example, the resin (RS) may include a thermoplastic material. A detailed description thereof will be described later.

For example, a space 718 surrounded by the plurality of first connecting ribs 714 and the first base 713 may form a portion of receiving spaces 718 and 726 (to be described later) in which the stator 660, which will be described later, is accommodated.

The stator 660 may include a stator body 661 provided to form an exterior, and a core coupler 662 extending in the up and down direction along an outer circumference of the stator body 661.

For example, the core coupler 662 may be defined as a space between a pair of body ribs 663 provided to protrude from the outer circumference of the stator body 661 in a radial direction of the stator body 661 and provided to extend in the up and down direction. In other words, the core coupler 662 may include a slide groove extending in the up and down direction.

A connecting protrusion 717 extending downward may be formed on a lower end of the first connecting rib 714. The connecting protrusion 717 may be inserted into a connecting groove 724 (to be described later) of the cover portion 720 to connect the base portion 710 and the cover portion 720.

A first coupler 716 protruding toward a portion of the receiving space 718 may be formed on one inner surface of the first connecting rib 714. The first coupler 716 may extend along a longitudinal direction of the first connecting rib 714. For example, the first coupler 716 may be coupled to the core coupler 662 of the stator 660.

The cover portion 720 may include a cover portion 721 provided to form a portion of the exterior of the cover portion 720 and provided to cover the impeller 640. For example, the cover portion 721 may have a substantially hollow hemispherical shape.

The cover portion 720 may include a through-hole 722 into which a second side 613 of the rotor 610 is inserted. For example, the through-hole 722 may be formed in an upper portion of the cover portion 721. The second side 613 of the rotor 610 may be inserted into the through-hole 722, and one end of the rotor 610 may be connected to the impeller 640.

The cover portion 720 may include a second connecting rib 723 provided to protrude upward. For example, the second connecting rib 723 may include a plurality of second connecting ribs 723 arranged along the outer circumference of the cover portion 721. The cover portion 720 may include a reinforcing rib 728 provided to protrude outward from the second connecting rib 723 and connected to the cover portion 721.

A second coupler 725 provided to protrude toward a portion of the receiving space 726 (to be described later) may be formed on one inner surface of the second connecting rib 723. The second coupler 725 may extend along a longitudinal direction of the second connecting rib 723. The second coupler 725 may be coupled to the core coupler 662 of the stator 660.

For example, the first coupler 716 and the second coupler 725 may each have a shape of a slide rib.

The space 726 surrounded by the cover body 721 and the plurality of second connecting ribs 723 may form the remaining portion of the receiving spaces 718 and 726 in which the stator 660 is accommodated.

The base portion 710 and the cover portion 720 may be provided to be coupled to each other. The first connecting rib 714 of the base portion 710 and the second connecting rib 723 of the cover portion 720 may be arranged to correspond to each other. Particularly, when the base portion 710 and the cover portion 720 are connected to each other, the first connecting rib 714 and the second connecting rib 723 may be in contact with each other so as to be connected to each other.

The connecting groove 724 may be formed in an upper portion of the second connecting rib 723. The connecting groove 724 may be formed to open upward. For example, the connecting protrusion 717 of the base portion may be inserted into the connecting groove 724 through a tight-fitting method.

As the connecting protrusion 717 is inserted into the connecting groove 724, the base portion 710 and the cover portion 720 may be connected and coupled to each other.

A space, which is surrounded by the first base 713 and the plurality of first connecting ribs 714 of the base portion 710, and the cover portion 721 and the plurality of second connecting ribs 723 of the cover portion 720 when the base portion 710 and the cover portion 720 are coupled to each other, may be defined as the receiving spaces 718 and 726. The stator 660 may be accommodated in the receiving spaces 718 and 726.

The stator 660 may include the stator body 661 provided to form a rotor receiving portion 664 into which the rotor 610 is inserted. The stator body 661 may form the exterior of the stator 660.

The pair of body ribs 663 protruding in the radial direction of the stator body 661 may be formed on the outer circumference of the stator body 661. A space formed by the pair of body ribs 663 spaced apart from each other may be defined as the core coupler 662.

The core coupler 662 may extend in the up and down direction. For example, the core coupler 662 may include a plurality of slide grooves 662 arranged along the outer circumference of the stator body 661.

When the base portion 710 and the cover portion 720 are coupled to each other and the stator 660 is accommodated in the receiving spaces 718 and 726, the first coupler 716 and the second coupler 725 may be located together on an extending line that extends in the up and down direction. The first coupler 716 and the second coupler 725 may be inserted together into the core coupler 662 of the stator 660 to support the stator 660.

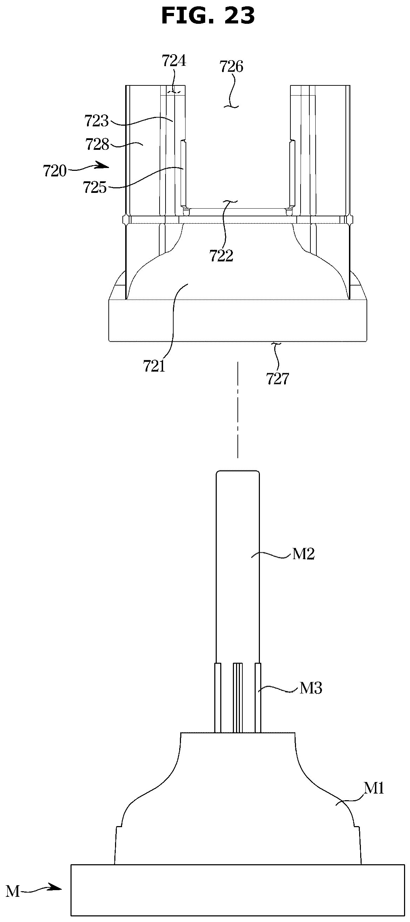

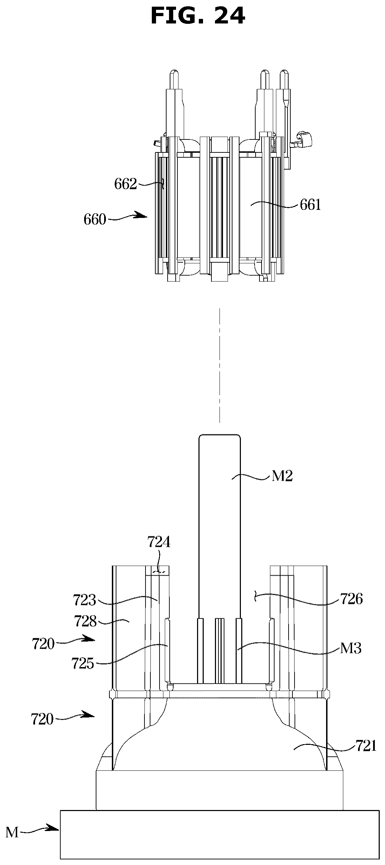

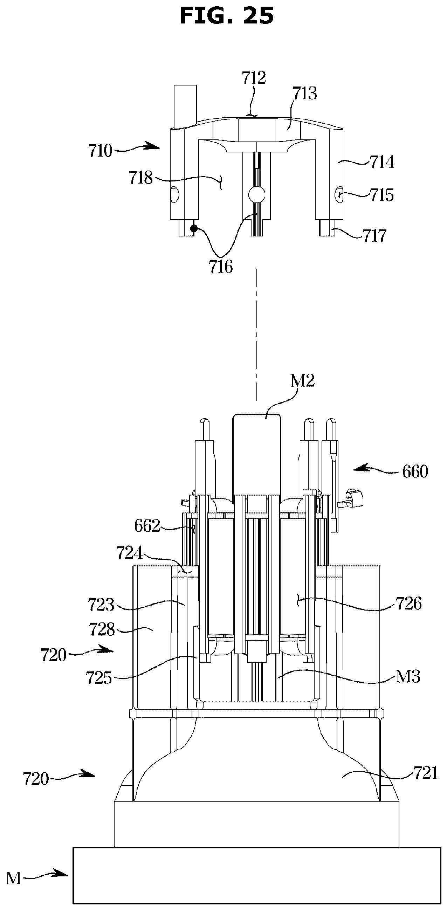

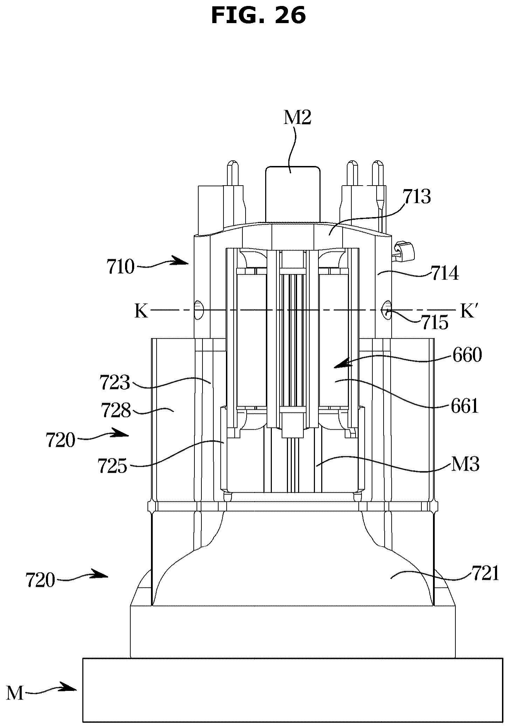

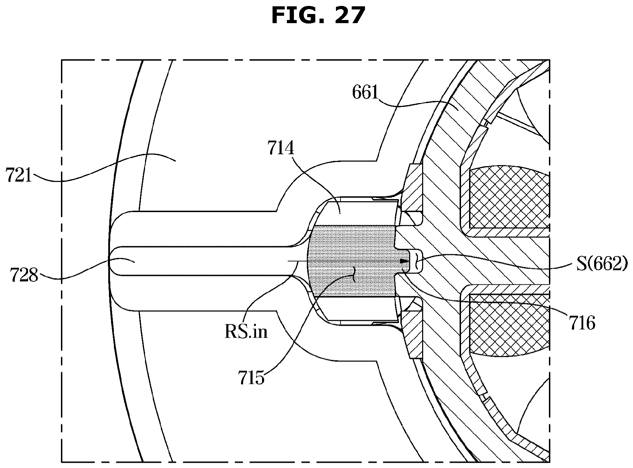

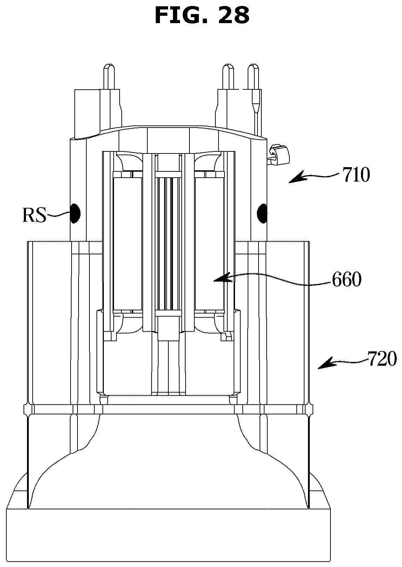

FIG. 23 is a view illustrating a process in which the housing is integrally coupled in the motor according to one embodiment. FIG. 24 is a view illustrating a process in which the housing is integrally coupled in the motor according to an embodiment. FIG. 25 is a view illustrating a process in which the housing is integrally coupled in the motor according to one embodiment. FIG. 26 is a view illustrating a process in which the housing is integrally coupled in the motor according to an embodiment. FIG. 27 is a cross-sectional view taken along a line K-K' of FIG. 26 and illustrates a state in which a resin is injected into an injection hole. FIG. 28 is a view illustrating a state in which the housing is integrally coupled in the motor according to one embodiment.

Referring to FIGS. 23 to 28, the cover portion 720, the stator 660, and the base portion 710 may be sequentially stacked to a guide M, thereby being coupled to each other. The base portion 710, the stator 660, and the cover portion 720 are coupled to each other by being stacked to the guide M. Accordingly, the stator 660 may be disposed between the base portion 710 and the cover portion 720 and at the same time, the center g of the first bearing hole and the center h of the through-hole may be effectively arranged on a rotation center axis T of the rotor (refer to FIG. 22).

After the base portion 710, the stator 660, and the cover portion 720 are coupled to each other, the guide M may be removed.

The guide M may include a first guide M1 having a shape corresponding to the shape of the inner circumferential surface of the cover portion 721, and a second guide M2 provided to protrude and extend upward from a center of the first guide M1. A plurality of stoppers M3 may be formed to be spaced at regular intervals on an outer circumference of the second guide M2. For example, the second guide M2 may be referred to as a guide bar M2.

Hereinafter a process in which the base portion 710, the stator 660, and the cover portion 720 are coupled by the guide M will be described in detail.

The cover portion 720 may be seated on the guide M to allow the inner surface of the cover portion 721 to be in contact with the first guide M1. When the cover portion 720 is seated on the guide M, the second guide M2 may penetrate the through-hole 722 and extend upward, and the stopper M3 may penetrate the through-hole 722, and be placed outside the cover portion 721. At this time, the center of the second guide M2 and the center h of the through-hole 722 may be arranged on the same line.

Thereafter, the stator 660 may be seated on the guide M to allow the second guide M2 to be inserted into the rotor receiving groove 664. At this time, the stator 660 may be seated on the guide M at a position in which the lower surface of the stator body 661 is supported by an upper end of the stopper M3. The center of the rotor receiving groove 664 and the center of the second guide M2 may be placed on the same line, and thus the center of the rotor receiving groove 664 and the center of the through-hole 727 may be placed on the same line.

When the lower surface of the stator body 661 is supported on the upper end of the stopper M3, the slide rib 725 of the cover portion 720 may be slid and inserted into the core coupler 662 of the stator 660.

Thereafter, the base portion 710 may be coupled to the cover portion 720 at a position in which the second guide M2 penetrates the first bearing hole 712. At this time, the connecting protrusion 717 of the base portion 710 may be inserted into the connecting groove 724 of the cover portion 720. Additionally, the first coupler 716 of the base portion 710 may be inserted into the core coupler 662 of the stator 660.

The center g of the first bearing hole 712 and the center of the second guide M2 may be arranged on the same line. In conclusion, the center g of the first bearing hole, the center of the rotor receiving groove 664, and the center h of the through-hole may be arranged on the same line.

When the first coupler 716 and the second coupler 725 are inserted into the core coupler 662, a separation space S that is not covered by the first coupler 716 and the second coupler 725 may be formed in the core coupler 662. In other words, the separation space S may be a space that is generated because an inward end of the first coupler 716 and an inward end of the second coupler 725 are not in contact with the stator body 661.

For example, the separation space S may communicate with the injection hole 715 formed to penetrate the first connecting rib 714 of the base portion 710. The injection hole 715 may be formed to penetrate the first connecting rib 714 to allow the separation space S to communicate with the outside.

A resin (RS) may be insert-injected (RS. in) into the injection hole 715. The injected resin (RS) may flow into the separation space S and come into contact with the first coupler 716, the second coupler 725, and the stator body 661. Thereafter, the resin (RS) may be solidified to integrally couple the base portion 710 and the cover portion 720. Additionally, the stator 660 may be fixed to the housing 700.

The motor 300 according to one embodiment comprising the stator 360, the rotor 310 configured to be insertable into the rotor receiving portion 364 formed in the stator 360 and to rotate by electromagnetically interacting with the stator 360, the impeller 340 coupled to the rotor 310 and configured to generate an airflow by being rotated and the housing 400 comprising the base portion 411 comprising the receiving space 415 provided to accommodate the rotor 310 and the stator 360 and the cover portion 420 comprising the through-hole 422, through which the rotor 310 passes, the cover portion 420 provided to cover the impeller 340. The base portion 411 comprises the stator insertion hole 416 formed to be open on the lateral side of the base portion 411 to allow the stator 360 to be inserted into the receiving space 415, and the bearing hole 412 in which a bearing 381 configured to support the rotor 310 inserted into the rotor receiving portion and accommodated in the receiving space is installed when the stator is accommodated in the receiving space, and formed in an upper portion of the base portion.

The bearing hole 412 may be a first bearing hole 412 in which a first bearing 381 provided to support a first side 311 of the rotor 310 accommodated in the rotor receiving portion 364 is installed. The impeller 340 may be disposed between the first side 311 of the rotor 310 and a second side 313 of the rotor 310 passing through the through-hole 422. The motor 300 may further comprise a housing cover 500 comprising a second bearing hole 523, in which a second bearing 382 provided to support the second side 313 of the rotor 310 is installed, the housing cover 500 coupled to the housing 400.

The center d of the bearing hole 412 and a center e of the through-hole 422 may be disposed on a rotation center axis R of the rotor 310 accommodated in the rotor receiving portion 364.

The motor 300 may further include the plurality of connecting ribs 414 arranged spaced apart from each other along an outer circumference of the base portion 411 and provided to connect the base portion 411 and the cover portion 420. The stator insertion hole 416 may be the space formed by the plurality of connecting ribs 414.

The housing 400 further include the support member 440 configured to support the stator 360 seated in the receiving space 415, and being removably coupled to the base portion 411.

The base portion 411 may include the first base portion 4111 forming the first bearing hole 412, and the second base portion 4113 connecting the first base portion 411 to the plurality of connecting ribs 414, and forming the insertion hole 4132 into which a coupling member 430 provided to couple the support member 440 to the base portion 411 is inserted.

The support member 440 may include the coupling hole 432 configured to be coupled to the coupling member 430 inserted into the insertion hole 4132.

The support member 440 may include the support block 441 in which the coupling hole 432 is formed, and the support protrusion 442 protruding from the support block 441 toward the receiving space 415 to support the stator 360 seated in the receiving space 415 from the lower side.

The stator 360 may include a stator core 361 that forms the rotor receiving portion 364, and the base portion 411 may include the support groove 4112' configured to be in contact with the upper surface of the stator core 361 to support the stator core 361 seated in the receiving space 415.

The cover portion 420 may further include the protruding rib 426 and 427 protruding from the inner surface 425 of the cover portion 420 toward the inner side of the cover portion 420 and extending along the inner circumferential surface of the cover portion 420, and when the impeller 340 is coupled to the rotor 310 and covered by the cover portion 420, the impeller 340 may be coupled to the rotor 310 at the position in which the impeller 340 is in contact with the protruding rib 426 and 427.

The bearing hole 212 and 215 may comprise the first bearing hole 212 in which a first bearing 181 provided to support a first side 111 of the rotor 310 accommodated in the rotor receiving portion is installed and the second bearing hole 215 in which the second bearing 182 provided to support the second side 112 of the rotor 310 accommodated in the rotor receiving portion 164 is installed.

The center a of the first bearing hole 212, the center b of the second bearing hole 215 and the center c of the through-hole 222 may be disposed on the rotation center axis A of the rotor 110 accommodated in the rotor receiving portion 164.

The base portion 210 may comprises the first base portion 211 comprising the first bearing hole 212, the second base portion 216 comprising the second bearing hole 215 and formed on the opposite side of the first base portion 211 with respect to the receiving space 213 and the plurality of base connectors 2171 and 2172 provided to connect the first base portion 211 and the second base portion 216 and arranged spaced apart from each other along an outer circumference of the first base portion 211.

The stator insertion hole 214 may be the space formed by the plurality of base connectors 2171 and 2172.

The motor 100 may further include the cover member 170 removably coupled to the base portion 210 so as to cover the stator insertion hole 214.

The cleaner 2 according to one embodiment includes the suction head 16, the main body 12 provided to communicate with the suction head 16, and the motor 300 installed in the main body 12 to form the suction airflow from the suction head 16 to the inside of the main body 12. The motor 300 includes the stator 360, the rotor 310 configured to rotate by electromagnetically interacting with the stator 360, and the impeller 340 coupled to the rotor 310 and configured to generate an airflow by being rotated. The motor 300 includes the housing 400 including the base portion 411 including the receiving space 415 provided to accommodate the rotor 310 and the stator 360, and the cover portion 420 including the through-hole 422 through which the rotor 310 passes, the cover portion 420 provided to cover the impeller 340. The base portion 411 includes the bearing hole 412 formed in the upper portion of the base portion 411 to install the bearing 381 provided to support the rotor 310, and the stator insertion hole 416 formed to be open on the lateral side of the base portion 411 to allow the stator 360 to be inserted into the receiving space 415.

The bearing hole 412 may be the first bearing hole 412 in which the first bearing 381 provided to support the first side 311 of the rotor is installed. The impeller 340 may be disposed between the first side 311 of the rotor and the second side 313 of the rotor passing through the through-hole 422. The cleaner 2 may further include the housing cover 500 including the second bearing hole 523, in which the second bearing 382 provided to support the second side 313 of the rotor is installed, and coupled to the housing 400.

The housing 400 may further include the support member 440 provided to support the stator 360 to allow the stator 360 to be seated in the receiving space 415 and removably coupled to the base portion 411. The support member 440 may include the support block 441 in which the coupling hole 432 provided to be coupled to the coupling member 430 provided to coupled the support member 440 to the base portion 411 is formed, and the support protrusion 442 provided to protrude from the support block 441 toward the receiving space 415 so as to support the stator 360 from the lower side.

The bearing holes 212 and 215 may include the first bearing hole 212 in which the first bearing 181 provided to support the first side 111 of the rotor is installed. The bearing holes 212 and 215 may include the second bearing hole 215 in which the second bearing 182 provided to support the second side 112 of the rotor is installed. The base portion 210 may include the first base portion 211 including the first bearing hole 212. The base portion 210 may include the second base portion 216 including the second bearing hole 215 and formed on an opposite side of the first base portion 211 with respect to the receiving space 213.

The cleaner 3 according to one embodiment includes the suction head 16, the main body 12 provided to communicate with the suction head 16, and the motor 600 installed in the main body 12 to form the suction airflow from the suction head 16 to the inside of the main body 12. The motor 600 includes the rotor 610 coupled to the impeller 640 configured to generate an air flow by being rotated, and the stator 660 configured to rotate the rotor 610 by electromagnetically interacting with the rotor 310 and including the core coupler 662 formed on the outer circumference thereof. The motor 600 includes the housing 700 including the base portion 710 including the first coupler 716 provided to be coupled to a portion of the core coupler 662, the base portion 710 provided to rotatably support the rotor 610, and the cover portion 720 including the second coupler 725 provided to be coupled to a remaining portion of the core coupler 662, the cover portion 720 provided to cover the impeller 640. When the first coupler 716 and the second coupler 725 are coupled to the core coupler 662, the separation space S is formed between the core coupler 662 and the first coupler 716 and between the core coupler 662 and the second coupler 725. The base portion 710 and the cove portion 720 are integrally coupled to each other by a resin (RS), which is insert-injected into the separation space S, so as to support the stator 660.

The stator 660 may include the rotor receiving portion 664 through which the rotor 610 passes. The base portion 710 may include the bearing hole 712 into which the bearing 681 provided to rotatably support the rotor 610 is inserted. The cover portion 720 may include the through-hole 722 through which the rotor 610 passes. The center of the rotor receiving portion 664, the center g of the bearing hole 712, and the center h of the through-hole 722 may be disposed on the rotation center axis T of the rotor 610.

The cover portion 720 may be seated on the guide M including the guide bar M2 disposed to penetrate the center h of the through-hole 722. When the cover portion 720 is seated on the guide M, the guide bar M2 may penetrate the center of the rotor receiving portion 664, and the stator 660 may be seated at the position in which the stator 660 is supported by the stopper M3 formed in the guide bar M2. When the stator 660 is seated on the guide M, the core coupler 662 may be coupled to the second coupler 725.

When the cover portion 720 and the stator 660 are seated on the guide M, the guide bar M2 may penetrate the center g of the bearing hole 712 and the first coupler 716 may be coupled to the core coupler 662 and thus the base portion 710 may be arranged to be supported on the cover portion 720.

The base portion 710 may include the first connecting rib 714, in which the first coupler 716 is formed, the first connecting rib 714 provided to extend downward. The cover portion 720 may include the second connecting rib 723, in which the second coupler 725 is formed, the second connecting rib 723 provided to protrude upward. When the base portion 710 is supported on the cover portion 720, the first connecting rib 714 and the second connecting rib 723 may be arranged to allow the first coupler 716 and the second coupler 725 to be connected to each other.

The first connecting rib 714 may include the injection hole 715 provided to allow the separation space S to communicate with the outside, and the resin (RS) may be insert-injected into the separation space S through the injection hole 715.

The core coupler 662 may include the slide groove 662 extending in the longitudinal direction of the stator 660. The first coupler 716 and the second coupler 725 may include slide ribs 716 and 725 provide to be slid and inserted into the core coupler 662, respectively.

The separation space S may be defined as a partial space of the slide groove 662 that is not covered by the first coupler 716 and the second coupler 725 when the respective slide ribs 716 and 725 are inserted into the slide groove 662.

The resin (RS) may include a thermoplastic material.

As is apparent from the above description, because a cover portion is formed integrally with a base portion, an assembly tolerance may be reduced compared to a case in which the cover portion and the base portion are assembled separately. Accordingly, it is possible to reduce interference between an impeller and a housing when the impeller rotates.

Further, it is possible to reduce interference between an impeller and a housing when the impeller rotates, and it is possible to stably rotate a rotor. Accordingly, it is possible to reduce noise because vibrations of a motor are reduced, and thus it is possible to increase the operating efficiency of the motor.

Further, as a cover portion accommodating an impeller is formed integrally with a base portion accommodating a stator, an assembly tolerance may be reduced, and thus interference between an impeller and a housing may be reduced when the impeller rotates.

Further, because a first bearing hole, into which a bearing provided to support a rotor is inserted, is formed integrally with a through-hole formed in a cover portion accommodating an impeller, it is possible to reduce an eccentricity between the first bearing hole and the through-hole that may occur when the first bearing hole and the through-hole are separately formed. Accordingly, it is possible to increase the motor efficiency.

Additional aspects of the disclosure will be set forth in part in the description which follows and, in part, will be obvious from the description, or may be learned by practice of the disclosure.

While the present disclosure has been particularly described with reference to exemplary embodiments, it should be understood by those of skilled in the art that various changes in form and details may be made without departing from the spirit and scope of the present disclosure.

## Claims

1. A motor comprising:
a stator;
a rotor configured to be insertable into the rotor receiving portion formed in the stator and to rotate by electromagnetically interacting with the stator;
an impeller coupled to the rotor and configured to generate an airflow by being rotated; and
a housing comprising a base portion comprising a receiving space provided to accommodate the rotor and the stator; and a cover portion comprising a through-hole, through which the rotor passes, the cover portion provided to cover the impeller,
wherein the base portion comprises:
a stator insertion hole formed to be open on a lateral side of the base portion to allow the stator to be inserted into the receiving space, and
a bearing hole in which a bearing configured to support the rotor inserted into the rotor receiving portion and accommodated in the receiving space is installed when the stator is accommodated in the receiving space, and formed in an upper portion of the base portion. .

2. The motor of claim 1, wherein
the bearing hole is a first bearing hole in which a first bearing provided to support a first side of the rotor accommodated in the rotor receiving portion is installed,
wherein the impeller is disposed between the first side of the rotor and a second side of the rotor passing through the through-hole,
wherein the motor further comprises a housing cover comprising a second bearing hole, in which a second bearing provided to support the second side of the rotor is installed, the housing cover coupled to the housing.

3. The motor of claim 1, wherein
a center of the bearing hole and a center of the through-hole are disposed on a rotation center axis of the rotor accommodated in the rotor receiving portion.

4. The motor of claim 2, further comprising:
a plurality of connecting ribs arranged spaced apart from each other along an outer circumference of the base portion and provided to connect the base portion and the cover portion,
wherein the stator insertion hole is a space formed by the plurality of connecting ribs.

5. The motor of claim 4, wherein
the housing further includes a support member configured to support the stator seated in the receiving space, and being removably coupled to the base portion.

6. The motor of claim 5, wherein
the base portion includes:
a first base portion forming the first bearing hole, and
a second base portion connecting the first base portion to the plurality of connecting ribs, and forming an insertion hole into which a coupling member provided to couple the support member to the base portion is inserted.

7. The motor of claim 6, wherein
the support member includes a coupling hole configured to be coupled to the coupling member inserted into the insertion hole.

8. The motor of claim 7, wherein
the support member includes:
a support block in which the coupling hole is formed, and
a support protrusion protruding from the support block toward the receiving space to support the stator seated in the receiving space from a lower side.

9. The motor of claim 2, wherein
the stator includes a stator core that forms the a rotor receiving portion, and
the base portion includes a support groove configured to be in contact with the upper surface of the stator core to support the stator core seated in the receiving space.

10. The motor of claim 1, wherein
the cover portion further includes a protruding rib protruding from an inner surface of the cover portion toward an inner side of the cover portion and extending along an inner circumferential surface of the cover portion, and
when the impeller is coupled to the rotor and covered by the cover portion, the impeller is coupled to the rotor at a position in which the impeller is in contact with the protruding rib.

11. The motor of claim 1, wherein
the bearing hole comprises:
a first bearing hole in which a first bearing provided to support a first side of the rotor accommodated in the rotor receiving portion is installed; and
a second bearing hole in which a second bearing provided to support a second side of the rotor accommodated in the rotor receiving portion is installed.

12. The motor of claim 11, wherein
a center of the first bearing hole, a center of the second bearing hole and a center of the through-hole are disposed on a rotation center axis of the rotor accommodated in the rotor receiving portion.

13. The motor of claim 11, wherein
the base portion comprises:
a first base portion comprising the first bearing hole;
a second base portion comprising the second bearing hole and formed on an opposite side of the first base portion with respect to the receiving space; and
a plurality of base connectors provided to connect the first base portion and the second base portion and arranged spaced apart from each other along an outer circumference of the first base portion.

14. The motor of claim 13, wherein
the stator insertion hole is a space formed by the plurality of base connectors.

15. **16.** The motor of claim 11, further comprising:
a cover member removably coupled to the base portion so as to cover the stator insertion hole.
